# EUROPEAN PATENT APPLICATION

(11) **EP 3 905 148 A1**
(43) Date of publication of application: **03.11.2021**
(21) Application number: 20187677.8
(22) Date of filing: 24.07.2020
(51) Int. Cl.: G06Q 10/00, G06Q 10/02, G06Q 10/10, G06Q 50/10, G06Q 50/18

(54) **MULTI-LEVEL CLUSTERING**

(30) Priority: 28.04.2020 US 202016861206
(71) Applicant: Directly, Inc., San Francisco, CA 94107 (US)
(72) Inventor: TODD, Jason, Menlo Park, 94025 California (US); OZDEMIR, Sinan, Menlo Park, 94025 California (US); GONZALEZ PONFERRADA, Eduardo, Menlo Park, 94025 California (US); ABDULLAH, Shayaan Ahmad, Menlo Park, 94025 California (US); PATTERSON, Jeff, Menlo Park, 94025 California (US); GOLUBOCK, Scott, Menlo Park, 94025 California (US); BRYDON, Antony, Menlo Park, 94025 California (US)
(74) Representative: Murgitroyd & Company

(57) **Abstract**

A customer communication system is configured to automatically communicate with human customers in a conversation including an ordered sequence of messages. Messages from the system to the customers are selected based on a knowledge graph. The knowledge graph including multiple levels of clusters of customer messages, each of the clusters being associated with a responsive supporting message. The customer communication system is optionally configured to identify inadequacies in the knowledge graph and obtain corrections from a human expert. The system may be adapted to communicate with parties other than customers.

## Description

### BACKGROUND

### Field of the invention

The invention is in the field enterprise information management, and more specifically in the field of preventing, routing and managing customer service inquiries, and/or other types of workflow activities.

### Related Art

Typical customer service systems include a contact center configured to communicate with customers by voice, chat, video, text, e-mail, social media, and/or other channels. These systems often include a series of questions that are presented to a customer and configured to identify the customer's needs. For example, a customer calling to a contact center may be asked to enter numbers on their phone to route the call to a specific group of service personnel. The customer is typically placed in a queue and then transferred to the next available service person. Such contact centers are expensive to establish and maintain.
Some businesses provide customer support content intended to resolve customer issues prior to receiving a customer service request (i.e., customer service ticket, or just "ticket") from a customer. The customer support content can include articles, answers to frequently asked questions, or other website content.

### SUMMARY

Some embodiments of the invention include systems and methods utilizing a multi-dimensional knowledge graph to support a conversational response management system. The knowledge graph includes nodes associated with clusters of messages, each of the clusters typically also associated with at least one responsive message or action. The knowledge graph is multi-dimensional in that the nodes can be traversed via multiple paths; each path being mapped to a sequence of messages that form a conversation.

The knowledge graph is optionally adapted to providing automated messages in response to customer service inquiries. In such embodiments, a customer service system may use the knowledge graph to engage in an automated conversation with a customer. As discussed elsewhere herein, this system may have features configured for detecting errors in the knowledge graph, adapting the knowledge graph to handle new inquiries, and/or allowing human experts to engage in conversations when desirable.

Some embodiments of the invention include systems and methods of providing improved customer service. These improved services may be achieved by resolving customer issues in several stages. For example, a first stage of resolving customer issues can include directing customers to expert mediated support content such as blogs and help pages. If this content is not sufficient to resolve an issue, a customer support inquiry may be processed in real-time by one or more external experts and/or sending the customer support inquiry to a staffed contact center. An attempt to resolve an inquiry may be made using the external experts prior to routing the inquiry to the contact center. The processing includes presenting the customer service inquiries to one or more "experts." These experts may be independent persons having experience or qualifications in the subject of the customer service inquiry. Optionally, customer service inquiries that are not resolved by an expert are eventually forwarded to agents in an enterprise contact center.

Experts are managed by computing systems configured to determine which expert should receive a particular customer service inquiry, to determine which experts are currently available, to manage rewards, and/or to generate expert scores. Customer service inquiries are routed by the computing systems to establish communication channels between the expert and source of the service inquiry. These computing systems are thus configured via specific computing instructions to produce a specific purpose computing system.

A customer service system is configured to provide customer support content to customers. The support content is provided based on a predictive model, a knowledge graph, and/or evaluation of the content by experts. The support content is selected based on an inquiry provided by a user and optionally a history or other characteristics of the user. The history can include resent web browsing activity.

In some embodiments, customer support content is provided in a window configured to receive the question from the user and to both use the question to select the customer support content and to send the question to a customer service system if the customer support content is not sufficient to resolve the question. In some embodiments, the experts of a customer service system are used to qualify and/or rate customer support content for use in answering specific questions or clusters of questions.

Various embodiments include a customer support system configured to automate customer service inquiries, the system comprising: a request I/O configured to send a customer service inquiry to a customer service system, and to receive customer support content from the customer service system, the customer service system including both a customer service knowledge base configured to provide the customer support content and an expert management system configured to manage a plurality of experts; a parsing logic configured to determine one or more topic characteristics of the customer service inquiry; routing logic configured to route the customer service inquiry to a first human expert of the plurality of experts, the routing being based on an expertise of the human expert; content selection logic configured to select the customer support content based on one or more topic characteristics; display logic configured to display one or more links and a text input field, to the customer, the links being to the selected customer support content, the text input field being configured to receive the customer service inquiry from the customer and to send the customer service inquiry to the human expert; and control logic configured to provide the customer support content to the display logic prior to providing the customer service inquiry to the routing logic.

Various embodiments include a customer method of providing customer support, the method comprising: receiving a request for customer service from a customer; presenting the customer a service request interface, the request interface including a text entry field; detecting entry of text in the text entry field, the text including a customer service inquiry; selecting customer support content based on the entered text; presenting links to the selected customer support content to the customer in the customer service request interface; and receiving a request from the customer to send the customer service inquiry to an expert management system configured to manage a plurality of experts, after presenting the links to the customer in the customer service request interface.

Various embodiments of the invention include a customer support system comprising: a conversation storage configured to store a conversation, the conversation comprising an ordered exchange of messages between at least one customer and response management system; parsing logic configured to parse the messages and identify topic characteristics of the message; cluster logic configured to assign the messages to different clusters, the different clusters being included in a knowledge graph of the clusters, paths within the knowledge graph having an order of clusters corresponding to the ordered exchange of messages, an axis of the knowledge graph corresponding to clusters associated with different subject matter; response logic configured to provide automated responses to the customer as answers to customer messages, the responses being associated with the clusters and being selected by navigating between clusters of the knowledge graph based on messages received from the customer; an I/O configured to communicate the messages between the at least one customer and the response management system; and a processor configured to execute at least the cluster logic or the response logic.

Advantageously, the system may further comprise healing logic configured to correct the knowledge graph by identifying nodes of the knowledge graph that produce undesirable results and engaging a human expert to modify the identified nodes.

Advantageously, the healing logic may be configured to select the engaged human expert based on specificity levels of the identified nodes.

Advantageously, the healing logic may be configured to adapt the knowledge graph to previously unknown customer service inquiries.

Advantageously, human experts may be associated with specific nodes of the knowledge graph.

Advantageously, the cluster logic may be configured to assign a received message to a cluster associated with a node directly connected to a current node of the knowledge graph.

Advantageously, the system may further comprise filter logic configured to predict when a customer is likely to send a message including private or sensitive information.

Advantageously, the filter logic may be configured to transfer the conversation to a third party if it is predicted that the customer is likely to send a message including private or sensitive information.

Advantageously, the prediction may be based on reaching a node in the knowledge graph.

Advantageously, the cluster logic may be configured to assign a received message to a cluster associated with a node based on the location of the node along a path of a conversation, e.g., if the node is early or late in the path of the conversation, and/or based on which nodes have already been traversed in the conversation.

Various embodiments of the invention include a method of training a customer support system, the method comprising: receiving a plurality of customer support conversations, each of the conversations including an ordered exchange of messages between at least one customer and a support management system; parsing each of the messages to identify subject matter of the messages; assigning at least some of messages to members of a plurality of clusters based on the subject matter, each of the plurality of clusters being associated with a node in a knowledge graph; and determining paths between the nodes based on an order of the messages in the plurality of conversations.

Advantageously, the method may further comprise associating a human expert with one or more of the clusters, or identifying a new cluster of messages that cannot be assigned to existing clusters within the knowledge graph.

Advantageously, the paths from a current node to a next node of the knowledge graph may be based on an identity of the current node and previous nodes traversed in the path, on a machine learning system trained using customer support conversations, or on a statistical analysis of the customer support conversations.

Advantageously, intermediate nodes of the knowledge graph may be associated with messages to be sent to a customer, the messages being configured to determine a path to a next node of the knowledge graph.

Advantageously, the method may further comprise identifying nodes of the knowledge graph where input from a human expert are most likely to be required.

Advantageously, the method may further comprise receiving input from a human expert and adapting a message associated with a node in response to the received input, the message being adapted to determine a path to a next node.

Advantageously, the conversations are in a first customer support domain and the knowledge graph is trained in a different customer support domain prior to receiving the conversations.

Various embodiments of the invention include a method of processing a customer service request, the method comprising: receiving a customer message from a customer; parsing the customer message to identify a subject matter of the message; assigning the message to a next cluster based on the subject matter, the next cluster being one of a plurality of alternative clusters connected to a current cluster by paths in a knowledge graph of clusters; navigating along the path from the current cluster to the next cluster along one of the paths; and extracting a support message from the next cluster and providing the support message to the customer in response to the customer message to create a conversation including ordered messages between the customer and a response management system.

Advantageously, the knowledge graph may include top level clusters configured for entry into the knowledge graph, intermediate clusters configured to identify needs of a customer; and leaf clusters associated with answers to customer needs.

Advantageously, navigating along the path from the current cluster to the next cluster may include 1) navigating from a top-level cluster to an intermediate cluster, 2) navigating between intermediate clusters, and/or 3) navigating from an intermediate cluster to a leaf cluster.

The paths in the knowledge graph may for example result in navigation to a same cluster more than once.

At least one of the paths in the knowledge graph may be bidirectional.

Advantageously, assigning the message to a next cluster may be further based on identities of one or more clusters previously navigated in creation of the conversation.

The responsive message is configured to facilitate identification of the next cluster.

Advantageously, the method may further comprise selecting the current cluster based on inquiry data received in association with the customer message.

Advantageously, the inquiry data may include an account identifier, a customer identifier, a customer history, or data provided by the customer via a webpage or mobile application.

Advantageously, the method may further comprise determining that the customer message cannot be associated with any of the alternative clusters, with at least a minimum level of confidence; determining that the responsive message is inadequate based on customer response or failure to resolve a customer inquiry; and/or providing the ordered messages between the customer and the response management system to a human expert, in response to the determination that the responsive message is inadequate or in response to the determination that the customer message cannot be associated with any of the alternative clusters. An updated responsive message may be received from the human expert and associating the updated responsive message with one of the clusters of the knowledge graph.

Advantageously, the method may further comprise changing a path within the knowledge graph based on 1) the updated responsive message, 2) on the determination that the responsive message is inadequate, and/or 3) the failure to resolve a customer inquiry; and/or identifying a new cluster within the knowledge graph based on the updated responsive message or the customer message.

### BRIEF DESCRIPTION OF THE DRAWINGS

FIG. 1 illustrates a customer support system including a knowledge graph, according to various embodiments of the invention.
FIG. 2 illustrates a path of a conversation through a knowledge graph, according to various embodiments of the invention.
FIG. 3 illustrates a method of processing a customer service inquiry, according to various embodiments of the invention.
FIG. 4 illustrates methods of avoiding customer support tickets, according to various embodiments of the invention.
FIG. 5 illustrates methods of training an automated customer response system, according to various embodiments of the invention.
FIG. 6 illustrates methods of processing a customer service inquiry based on multilevel clusters, according to various embodiments of the invention.

### DETAILED DESCRIPTION

A conversation is an exchange between two or more parties, which includes an ordered set of messages passed between the parties. These messages typically include text, as in a chat conversation, but may include other data such as meta data, audio, images, and/or video. A conversation is distinguished by having an order in which the data is communicated, and relationships between the data. For example, a conversation may occur between a customer and a customer support system. The conversation may begin with receipt of a customer service inquiry from a customer and be followed by an ordered exchange of messages between the customer and the customer support system.

The systems and methods described herein are optionally directed toward the avoidance and/or resolution of customer service inquiries. For example, the systems and methods may be used to automatically provide pre-existing customer support content to a customer or to generate one or more responses to a customer service inquiry. The provision of pre-existing content, e.g., customer support content, may occur prior to sending a customer service inquiry (i.e., service ticket) to a customer services system. The customer service inquiry may be received directly from a customer or prospective customer ("a requester"). Alternatively, the customer service inquiry may be first communicated from a requester to a customer contact center (e.g., call center) and then forwarded from the contact center to the expert management systems described elsewhere herein. The inquiries are resolved by first routing the inquiries to an expert management system and then, if needed, the inquiries are routed to a contact center. The routing is based on a rule set that is configured to reduce the number of inquiries received by the contact center while, at the same time, assuring minimum levels of response quality, response time, and/or customer satisfaction. These rules are optionally embodied in an expert system and/or trained artificial intelligence/neural network/machine learning system. Typically, resolving inquiries using the expert management system is more cost effective than having the inquiries resolved by the contact center. As used herein the term "machine learning system" is meant to include expert systems, artificial intelligence systems, artificial neural networks, Bayesian statistical processors, and/or the like. As used herein the term "customer" is meant to include customers, prospective customers and other constituents who may generate requests.

Avoiding sending customer service inquiries to customer service systems to be answered by automated or human agents can be yet more cost effective. In some embodiments, avoiding a service ticket can be accomplished by providing the customer with customer support content prior to sending an inquiry to the customer service system. For example, a customer can be presented with articles, blogs or other pre-existing forms of customer support content. The content may be selected based on actions of the customer and/or a question provided by the customer. The content may be rated and/or approved by experts as being suitable for answering specific customer questions and/or clusters thereof.

While a contact center is typically managed or under contract with a specific enterprise, experts managed by the expert management system can be independent persons having expertise in one or more topics. For example, an expert in a cellular telephone service may be an experienced user or a current/former employee of a telephone company. The plurality of experts forms a support and/or service community having a diverse range of expertise. Communication with experts may be via the internet and/or other communication service. For example, an expert may provide customer service via a personal computer, tablet computer, or cellular telephone. Communication between a requester and an expert can be via telephone, voice over Internet Protocol (VoIP), text session, video, e-mail, chat, Facetime®, mobile application, etc. Both requesters and experts are examples of "users" of the system.

Experts may be compensated via a variety of methods. In some embodiments, a person making the inquiry for service posts a reward. In some embodiments, a tip is paid to the expert by the person making the inquiry after an answer is provided. In some embodiments, an enterprise pays or provides funds for paying experts to resolve service inquiries, optionally before the inquiries reach a contact center. For example, a utility company may designate funds to be paid to experts that prevent calls from reaching the utility company's contact center, or paid to experts for working on inquiries initially submitted to the contact center. In some embodiments, experts are rewarded for contributing to improvements in a knowledge graph. For example, an expert may be rewarded for providing improved or new responsive message associated with a node of the knowledge graph.

Certain terms are defined herein to have specific meanings. As these terms are used herein in the specification and claims, these terms are meant to be inherently limited by the definitions provided. Specifically, as used herein:

A "customer service inquiry" is defined as a request for help, assistance, support or some other type of service. Customer service inquiries can include technical service, sales service, advice, reviews, geographic directions, assembly directions, customer service, and/or the like. Customer service inquiries may originate from an individual or a business that wishes to know about, consumes or potentially consumes a product or service. Customer service inquiries are sometimes referred to herein as "service inquiries" or simply "inquiries" where the context is clearly referring to customer service inquiries. Inquiries may be requests for services or information. Customer service inquiries may be received from a web page or application including a text or other form field with which a customer can provide information (metadata) about their inquiry. For example, in various embodiments, customer service inquiries are received from a search field, a chat bot, a user interface presented in a webpage or application, and/or the like.

"Customer support content" is used herein to refer to articles, blog entries, manuals, specifications, Frequently Asked Question (FAQ) lists, message boards, and other documents of use in solving customer support issues. Customer support content can include frequently asked questions (FAQ) and answers. Customer support content is distinguished from automated answers in that customer support content is accessible via a link, file transfer protocols, and/or a network (e.g., IP) address. In some embodiments, customer support content is accessible to customers by navigation through a website or support application. For example, an enterprise may have customer support content that includes blogs, web pages and lists of frequently asked questions. This content can be accessible and/or searchable via links of a website. Optionally, a customer is presented with a list of links to customer support content which they can access through a browser or dedicated help application. Customer support content may be generated and/or contributed to by experts.

A "requester" is a person, application or enterprise that submits a customer service inquiry using a communication device. For example, a requestor may initiate a conversation with a customer support system.

An "expert" is defined as a person that contributes to customer support content and/or makes him or herself available to provide responses (e.g., answers) to customer service inquiries. Experts can have different specialty characteristics, which denote topics in which the expert has expertise. In some embodiments, experts may have different levels of certification. For example, a "certified expert" may be one that is acknowledged by an enterprise to have specialty characteristics in the activities of that enterprise. In one embodiment, an airline certifies outside experts as having specialty characteristics in the airline's reservation system. A certified expert may be certified on the basis of having passed a test such as a language test or a technical skill test, and/or on the basis of having completed specific training. These experts may be former employees of the airline and/or have been trained by the airline. An internal expert is an enterprise employee or some other person that is provided with access to customer and/or account information that is generally not public. For example, if an enterprise is a bank, then an internal expert may be a contractor to whom the bank has given access to selected customer account information. Experts may have different types of expertise. For example, some experts may have general knowledge and be qualified for troubleshooting and classifying a customer service inquiry, while other experts have specific knowledge and be qualified to answer a specific question.

A "knowledge graph" is a data structure comprising nodes and connections between the nodes. Each node is associated with a cluster of messages that may be received from customers and optionally associated with a response message and/or action. Some response messages may be configured to further characters a customer's need, while some response messages are configured to provide a definitive response (an answer that resolves the need). Connections between the nodes provide paths via which the knowledge graph can be navigated. Navigation from one node to another is typically dependent on messages received from customers or results of actions. A path through the knowledge graph maps to an ordered sequence of messages forming a conversation between the customer and the customer support system. In some embodiments a knowledge graph includes three types of clusters: top level clusters configured for entry into the knowledge graph; intermediate clusters configured to identify needs of a customer; and leaf clusters associated with answers to customer needs. Experts may be assigned to specific nodes or sets thereof.

A "contact center" is defined as a facility populated by service personnel consisting of employees of an enterprise or employees of contractors to the enterprise for the purpose of responding to customer service inquiries. Contact centers may support one or more specific enterprises and normally have a set number of service personnel available to answer service inquiries at any given time. Contact centers may communicate with requesters by phone, chat, text and/or e-mail. The service personnel of a contact center are directly or indirectly under the control of an enterprise that pays for the service personnel to answer service inquiries and control the contents of the answers provided. One example of a contact center is a traditional call center.

An "enterprise" is defined as a business or other organization that would normally receive customer service inquiries relating to products or services of the enterprise, or other types of inquiries. Examples of enterprises include corporations, product and service companies, professional organizations, political organizations, unions, non-profits, and/or academic or scientific institutions. Enterprises may have their own contact centers or may contract contact center services from third parties. In either case, the enterprises typically have control over the activities of contact center personnel. For example, the Enterprise will define answers to be given to specific questions.

An "answer" is the content of a response to a customer service inquiry and is intended to resolve the inquiry, ask for explanation or further details of the inquiry, and/or provide the requester with options relating to resolution of the inquiry. Answers may be provided as a "response message" or "responsive message" in a conversation.

A "partial response" is a response to be modified and/or approved by a human expert. Partial responses can include, for example, templates for answers, suggested answer contents, answers that require filtering of personal information, answer outlines, answer suggestions, and/or the like. A partial answer includes an answer that requires further action by a human agent. For example, a partial response may be approved, edited, and/or otherwise modified by a human expert prior to being provided to a requestor. In contrast, a "complete response" is a response ready to be provided to a source of a customer service inquiry.

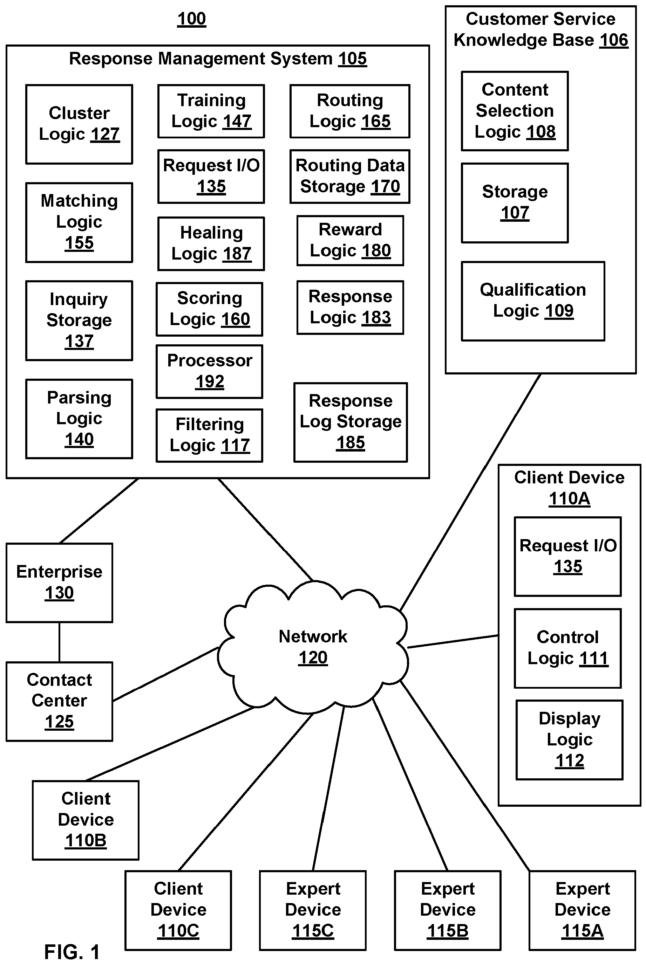

FIG. 1 illustrates a Customer Support System 100, according to various embodiments of the invention. Customer Support System 100 includes a Response Management System 105 configured to communicate with a plurality of Client Devices 110 and/or a plurality of Expert Devices 115 via a Network 120. In some embodiments, Customer Support System 100 is configured to automatically communicate with Client Devices 110, and only require input from Expert Devices 115 when the automated responses are found to be inadequate or to improve the knowledge graph. Customer Support System 100 optionally further includes a Customer Service Knowledge Base 106 configured to provide customer support content to Client Devices 110. In some embodiments, Customer Service Knowledge Base 106 is configured to reduce a number of customer service inquiries (i.e., support tickets) sent to Expert Devices 115 by providing customer support content that resolves customer support issues before other resources are employed to resolve the inquiries. Client Devices 110 and Expert Devices 115 are individually referenced as A, B, C, etc. The numbers of Client Devices 110 and Expert Devices 115 illustrated in FIG. 1 are for illustrative purposes. Typically, Customer Support System 100 is configured to service much larger numbers of Client Devices 110 and Expert Devices 115. Response Management System 105 is optionally further configured to communicate with a Contact Center 125 and/or an Enterprise 130. These communications optionally occur via Network 120.

Client Devices 110 are the communication devices of a person sending a customer service inquiry. These communication devices can include, for example, a personal computer, a telephone, a cellular telephone, a tablet computer, a vending device, an interactive advertisement, a terminal, a point of sale system, a kiosk, and/or the like. Client Devices 110 enable communication modes such as voice, text, e-mail, video, MMS (multimedia messaging), and/or the like. Client Devices 110 are optionally configured to communicate through a web browser. Client Devices 110 optionally include an application specifically configured for communicating with Response Management System 105 and/or Contact Center 125.

Expert Devices 115 are the communication devices of experts. Expert Devices 115 can include the same types of devices as discussed herein with respect to Client Devices 110. In some embodiments, an expert may have a plurality of different devices the expert uses to respond to and/or otherwise resolve customer service inquiries. For example, one expert may use a personal computer, a tablet computer and a cellular phone to communicate with Clients 110 and/or Response Management System 105. Expert Devices 115 optionally use a browser or custom application for this communication.

Network 120 is a communication network such as the internet, a wide area network, a cellular network, a telephone network (POTS), a satellite network, a cable network, and/or the like. Network 120 may include wired and wireless segments.

Response Management System 105 includes a Request I/O 135 configured to receive customer service inquiries and communicate with Contact Center 125, Client Devices 110 and Expert Devices 115. Request I/O 135 may include a plurality of different devices, such as routers, firewalls, Ethernet ports, gatekeepers, switches, WiFi or Bluetooth transmission hardware, and/or the like. Request I/O 135 is configured to communicate via Network 120 and is typically configured to communicate via TCP/IP protocols, WiFi protocols, and/or cellular protocols. Request I/O 135 is optionally configured to communicate over a secure (e.g., encrypted) communication channel. The customer support inquiries received via Request I/O 135 may be received at a data warehouse form an ETL (Extract, Transform and Load) process, or alternatively received from a customer support export queue of Call Center 125. In some embodiments, Request I/O 135 is configured to facilitate communication of a conversation between a customer and Response Management System 105.

In some embodiments, instances of Request I/O 135 are included in Client Devices 110. These instances can include logic configured to present a customer service request interface to a customer, and to receive input from the customer via the customer service request interface. For example, Request I/O can be configured to communicate via Network 120 to Response Management System 105 and/or Customer Service Knowledge Base 106. This communication can include text entered by a user of Client Device 110A in a text field and/or content selection logic and links thereto.

Response Management System 105 optionally further includes an Inquiry Storage 137. Inquiry Storage 137 includes memory such as RAM, SRAM, a hard drive, flash memory, an optical drive, etc. Inquiry Storage 137 optionally further includes data structures specifically configured to store customer support inquiries. This data structure may be part of a database and/or data warehouse.

In some embodiments, Inquiry Storage 137 includes "conversation storage" configured to store a conversation comprising an ordered exchange of messages. A conversation can include, for example, an exchange of messages between a customer and one or more human expert and/or an exchange of messages between a customer and an automated part of Customer Support System 100. The messages exchanged typically include text, as in a chat session, but may also include other multimedia content such as video, audio and/or images. For example, a conversation may include an exchange of text messages and communication of images. In various embodiments, a conversation can include communication of single or multi-factor authentication data, status data from a device in possession of the customer (e.g. a status data from an electronic device or a vehicle), location data, and/or the like. A conversation is characterized by temporal relationships between the exchanged messages, e.g., one comes before another. Although in conversations including more than two parties, messages may be included in separate threads and, thus, have both parallel and serial relationships with each other.

A conversation is optionally initiated by a customer inquiry received from a customer. For example, a customer may open a customer support ticket via a webpage or a mobile application. The customer inquiry may be accompanied by characteristics (conversation metadata) such as a customer location, a customer identifier, authentication data, serial numbers, model numbers, device identifiers, cookie data, a telephone number, an e-mail address, menu selections, inquiry history, and or the like. For example, a customer service inquiry may be generated when a customer fills out a support request form on a website. Questions on the form may include identification of a product or service, problems encountered, model or version numbers, frequently asked questions, error messages, and/or the like. As noted elsewhere herein, such characteristics of a customer inquiry may be used to determine a starting point and/or navigation of a conversation.

Response Management System 105 further includes a Parsing Logic 140 configured to parse received customer service inquiries. Parsing Logic 140 includes computer implemented logic configured to automatically parse each customer service inquiry and determine one or more topic characteristics of the inquiry, without human analysis. Parsing Logic 140 includes hardware, firmware and/or software stored on a non-transient computer readable medium. Topic characteristics are characteristics of the service inquiry that are indicative of the topic(s) of the service inquiry. Topic characteristics may include what the inquiry is about, the meaning/point of the inquiry, language objects identified in the inquiry, grammatical objects, information regarding a source of the service inquiry, metadata characterizing text within the service inquiry, account information, keywords within the service inquiry, and/or the like. Examples of topic characteristics include questions regarding specific software or hardware, business services, reservations, bill payment, account services, how to do something, medical questions, installation procedures, advice, appointments, professional recommendations, etc. In some embodiments, Parsing Logic 140 includes image or audio processing logic configured to process contents of an image or audio received as part of a conversation.

In some embodiments, Parsing Logic 140 is configured to identify a source of the customer service inquiry and to infer topic characteristics of the service inquiry based on the identity of the source. For example, if a service inquiry arises from a member of Client Devices 110 that includes a kiosk in a retail store of a cellular telephone company, then Parsing Logic 140 can infer that the topic of the customer service inquiry is related to the cellular telephone company. In another example, if the customer service inquiry is received from a webpage hosted by an electronics retailer, then Parsing Logic 140 can infer that the topic of the customer service inquiry is related to the products of the electronics retailer, or to a specific product displayed on the webpage. In some embodiments, Parsing Logic 140 is configured to use a location of a member of Client Devices 110 as a topic characteristic. For example, if the customer service inquiry is received from Client Device 110A while Client Device 110A is located at a national park, then Parsing Logic 140 can infer that the topic of the inquiry related to that park. Parsing Logic 140 is optionally configured to use a universal resource locator (URL), internet domain, account, browser type, application type, and/or similar information regarding the customer service inquiry. For example, Parsing Logic 140 may use the identity of a web page or mobile application from which a customer service inquiry was received to select a natural language processing lexicon to be used in identifying topic characteristics of the inquiry.

Parsing Logic 140 optionally includes a natural language processing engine to determine one or more topic characteristics of a customer service inquiry. A lexicon used by the natural language processing engine may be selected based on a source of the customer service inquiry. The natural language processing engine is optionally configured to detect and interpret phrases as well as key words and phrases that pertain to the industry (i.e., "wireless"), company (i.e., "Verizon"), location (i.e., "California"), topic (i.e., "Downloading music"), device (i.e., "iPhone"), etc.

In some embodiments, Parsing Logic 140 is configured to identify metadata within a customer service inquiry (e.g., characteristics of the service inquiry) and to assign particular meaning to data tagged by the metadata. For example, if the customer service inquiry is generated in Client Device 110B using a browser, the inquiry may include data entered in specific fields of a webpage configured to receive keywords such as model number, brands, serial numbers, topic identifiers, account numbers, login data, etc. The inquiry may include data characterizing a customer profile, a device type of Client Device 110B, a browser identity, an operating system identity, a source Universal Resource Locator (URL), a source Internet Protocol (IP) address, a source MAC address, a password, a security token or certificate, and/or the like.

The location of an expert may be considered in determining if an expert is available to respond to a specific inquiry, when a specific location facilitates responding to the inquiry. For example, if a customer wishes advice on places to visit within a city the inquiry may specify an expert local to the city. The language of an expert may be considered in determining if an expert is available to respond to a specific inquiry. For example, an inquiry may require communication in a specific language or translation between languages.

In some embodiments, Response Management System 105 is configured to receive and store an availability schedule from an expert. The availability schedule includes time during which the expert is available, unavailable and/or on standby. The condition of standby indicates that the expert is not currently available but could become available upon request. For example, an expert may be may be moved from a standby state to an available state in response to real-time demand. The change in state optionally includes sending a message to a device of the expert, e.g., Expert Device 115A, asking that the expert make ready to respond to inquiries in real-time. As demand changes, the expert may be placed back on standby. Such changes may be on a relatively short time scale, e.g., less than 10, 30 or 60 minutes, and are optionally not associated with a traditional multi-hour work shift. This allows the system to respond to changes in demand in real-time. In one illustrative example, an airline stewardess trained in reservations may be moved from a standby to an available status for a short time between flights, in response to a high demand. Moving from standby to active optionally includes moving the expert from a queue of experts on standby.

In some embodiments, an expert is assigned one or more scores. Expert scores are based on one or more of the following: a) time taken to provide an initial response to customer service inquiries, b) time taken to resolve customer service inquiries, c) feedback from requesters of customer service inquiries, d) ratings by fellow experts, and e) cooperation with fellow experts. For example, in some embodiments, a person making a customer service inquiry is asked to rate the quality of the response received from a particular expert. The quality can include factors such as speed of response, helpfulness, etc. In some embodiments, a fraction of responses to customer service inquiries made by an expert are sent to fellow experts for their review of the quality of the responses. The score of an expert can be based on both requester and fellow expert ratings.

Cooperation with fellow experts includes working with fellow experts to respond to a customer service inquiry, and referring customer service inquiries to other experts. A single customer service inquiry may be resolved by more than one expert in cooperation. For example, a problem involving a computer and a software application may be cooperatively solved by an expert having expertise on the computer and an expert having expertise on the software application. A first expert may refer a customer service inquiry to a second expert if the inquiry would be better resolved by the second expert. For example, if a first expert on airline reservations receives a customer service inquiry that would be better handled by a second expert on frequent flyer programs, then the first expert may forward the inquiry to the second expert. If, as optionally determined by the second expert, the forwarding was appropriate; the first expert may be rewarded by an improvement in expert score.

An expert score may include a general component and a component that is specific to different topics. Thus, and expert might have a better score in one topic relative to another topic. An expert may have a high score in motorcycle maintenance and a low score in computer networking.

In some embodiments, experts are classified, e.g. as "internal experts" and "external experts." Generally, an internal expert is an expert that is under the control of an organization such as Enterprise 130. Examples of internal experts include call center (e.g., Contact Center 125) staff, retired employees, off-duty employees, and/or the like. Generally, an external expert is an expert that is not under direct control of the organization. An external expert may be compensated based on posted rewards, which may be specific to a particular customer service inquiry. In contrast internal experts are more likely to be compensated at a fixed rate ($/answer or $/hr). Thus, internal and external experts may receive different rewards for answering a customer service inquiry.

Typically, internal experts are authorized to receive a greater amount of customer information relative to external experts. For example, internal experts may be authorized to access confidential financial data, account numbers, social security numbers, medical information, order history, customer data (telephone number, address, name, etc.), and/or the like, while external experts are not thus authorized. Internal experts may also be authorized to take actions for which external experts are not authorized. For example, an internal expert may be authorized to give a customer credit, to authorize a payment, to make a reservation, to accept an order, to electronically access a customer's device, and/or the like. The classification of experts need not be binary. For example, there can be multiple levels of expert authorization and/or capabilities. The authorization of an expert may be specified by an organization (e.g., Enterprise 130) to whom a customer service inquiry is directed, or may be specified by a third-party certification process. Such authorization may be made based on training and/or certification of the expert.

Response Management System 105 optionally further includes Cluster Logic 127. Cluster logic 127 is configured to determine if a received message, e.g., a message in a customer service inquiry, is a member of a cluster of customer service requests. "Clusters" are groups of customer service inquiries having similar topics and/or requiring similar responses. For example, a cluster of customer service inquiries may all be associated with a password change or with an account balance request. The information used to determine if a particular customer service inquiry is a member of a cluster includes, for example, a source of the customer service inquiry, images within the customer service inquiry, metadata associated with the customer service inquiry, and/or text within the customer service inquiry. In addition, Cluster logic 127 optionally attempts to obtain a greater understanding of the content a customer service inquiry, relative to Parsing Logic 140. For example, Cluster Logic 127 may employ a natural language processor to obtain a more accurate understanding of the text within a customer service inquiry or may consider a message as being part of a conversation. For example, in a conversation including: customer: "how to I connect my modem"; customer support system: "Can you tell me if the power light is ON on the front of your modem?"; customer: "yes", the customer's message "yes" will be interpreted in the context of the prior contents of the conversation. At a particular node in the knowledge graph the state of a conversation may be considered in determining a next node to which to navigate.

Cluster Logic 127 can include a trained machine learning system, e.g., a neural network or artificial intelligence system. This machine learning system is optionally trained using prior inquiries and responses (conversations) as described elsewhere herein. In some embodiments, Cluster Logic 127 is configured to identify new clusters in which customer service inquiries can be included. This identification can be based on customer service inquiries and/or responses to these inquiries. For example, if a number of inquiry responses include instructions on cancelling a reservation or subscription, then Cluster Logic 127 may examine the customer service inquiries that resulted in these inquiry responses and identify characteristics of the inquiries that can be used to categorize them into a cluster. In some embodiments, a new cluster identified by Cluster Logic 127 must be approved by an internal or external expert prior to use in classifying additional customer service inquiries.

In some embodiments, Cluster Logic 127 is configured to assign received messages to clusters in a multi-dimensional knowledge graph of nodes, each node associated with one of a plurality of clusters. This knowledge graph having at least one dimension of time (ordered sequence) and one or more dimensions of subject matter. Paths from one cluster (or node) to another cluster represent an order of clusters corresponding to an ordered exchange of messages. Assignment to a cluster, and corresponding node, is based on content or subject of the received message and the content and/or subject matter of the cluster/node.

The knowledge graph may include some nodes, e.g., nodes associated with top-level clusters, configured for entry into navigation of the knowledge. Examples, of the response messages (to be sent to a Client Device 110) associated with top-level clusters include: "I understand you would like to change your reservation. Do you have a reservation number?"; "I'm here to help you install your modem, can you provide the serial number on the back?"; "Which account balance would you like?"; "Is there a reason for your return"; and "How can I help you with your reservation?"

The knowledge graph may include some nodes, e.g., intermediate nodes, configured to identify needs of a customer. For example, intermediate nodes may be associated with questions (responsive messages) to be sent to a customer to troubleshoot or further identify a problem they are having. For example, "Would you like to change your reservation or cancel it completely?"; "Is the 'connected' light on the front of your modem flashing?"; "What does the error message say?"; "Do you know what version of windows you have?"; and "When did you start coughing?". In some embodiments, a node may be associated with an action in addition to or instead of a responsive message. For example, an automated action can include sending or receiving data or commands to or from a remote device. In a specific example, an automated action could include restarting a customer's modem, reading a modem status or measuring a response time of the modem.

The knowledge graph may include some nodes, e.g., leaf nodes, configured to provide a solution to a customer issue and/or conclusion of a conversation. For example, leaf nodes may include responsive messages such as: "Please return your purchase to Big Shot Returns, 123 Main St. San Francisco, CA 94000, be sure to include return authorization number 123456"; "Is there anything else we can help you with?"; "Your reservation has been updated, your new schedule is ...."; and "Your modem is confirmed to have a hardware error, a replacement will be sent to you within 24 hours."

Ideally, a conversation starts at a top-level node, proceeds along a path via one or more intermediate notes and concludes at a leaf node. Each of these nodes being associated with respective clusters. A conversation need not take a linear path through the knowledge graph. For example, in the process of troubleshooting, a negative or positive result may suggest backtracking to previously traversed nodes, in such a case, an updated state of the conversation may result in new messages (e.g., questions) being sent to a customer.

In some embodiments, as a conversation develops and the knowledge graph is navigated, Cluster Logic 127 is configured to assign a received message to a subset of the nodes in the knowledge graph that are directly connected to a current node. For example, the responsive message of a current node may include a question to ask a customer and Cluster Logic 127 is configured to match the customer's resulting answer to other nodes connected to the current node. In a specific example, a customer may be asked "How would you like to change your reservation." Possible responses include "Cancel please," "I would like to cancel," "change date," "different day," "upgrade," "I want to change locations," "I don't have a reservation," "I want a refund," etc. Each of these responses may be assigned to a cluster/node in the knowledge graph. Cluster Logic 127 may be configured to assign "Cancel please" and "I would like to cancel" to a first cluster (node) and to assign "change date" and "different day" to a second cluster. The first cluster being associated with a follow-up question regarding cancellation and the second cluster being associated with a follow-up question regarding new dates. This assignment determines the next node/cluster to be navigated to in the knowledge graph. As noted elsewhere herein, the connections between nodes may be determined using training data that includes prior conversations between customers and Expert Management System 105. This training data can be generated using a human expert or the automated system disclosed herein.

Response Management System 105 optionally further includes Matching Logic 155 configured to match customer service inquiries to human experts. The matching is optionally based on at least a score of one of the human experts and a correlation between the topic characteristics of the inquiry (e.g., as determined by Parsing Logic 140) and the specialty characteristics of the human expert. The expert score considered in matching is optionally specific to the topic characteristics and/or cluster of the inquiry. For example, an expert may have a plurality of scores associated with different clusters of customer service inquiries, e.g., relatively higher scores related to computer networking as compared to spider identification. As such the matching performed by Matching Logic 115 can be dependent on assignment of customer service inquiries to particular clusters. Response Management System 105 is optionally further configured to match inquiries and experts based on the availability of the experts. For example, if a customer service inquiry is to be resolved in real-time, then only those experts currently available are considered for matching. Matching Logic 155 may be configured to match inquiries to internal and/or external experts.

Matching Logic 155 is optionally configured to match a plurality of experts to a customer service inquiry. These experts may be ranked, for example, in order from best match to less favorable match. As is described further elsewhere herein, the customer service inquiry may be initially offered to the first ranked expert, and if not resolved later offered to a second ranked expert. In some embodiments, a requester can choose between two or more matched experts, or can select a plurality of experts to answer an inquiry in parallel.

In various embodiments, Matching Logic 155 is configured to match the inquiry based on a request for a specific human expert (e.g., an expert used by the requester in the past), to match based on a topic characteristic identified by a second human expert, and/or to match based on a referral by a second human expert. In some embodiments, Matching Logic 155 is configured to match the customer service inquiry to a second human expert based on an unsatisfactory answer received from the first human expert. In some embodiments, Matching Logic 155 is configured to match the inquiry to internal or certified experts from different third parties in parallel (e.g., based on two or more different topics characteristics of the customer service inquiry matching complementary specialty characteristics of the experts).

Matching Logic 155 is optionally configured to match an expert to one or more nodes of the knowledge graph disclosed herein. For example, an expert familiar with managing reservations may be matched to nodes/clusters related to that topic. The match means that the expert may be called upon to manage these nodes, to approve response messages associated with these nodes, to review messages associated with nodes not performing well, to adapt messages associated with nodes as circumstances change, and/or the like. For example, if a node is not performing at at least a minimum performance threshold, an assigned expert may be asked to review conversations involving that node and suggested changes in the clustering of customer messages and/or in the contents of responsive messages associated with the node. In some embodiments, an expert may further manually modify the connections/paths between nodes.

Response Management System 105 further includes Scoring Logic 160 configured to calculate expert scores and to associate these scores with the corresponding experts. As discussed elsewhere herein, scores are based, for example, on the historical performance of an expert. Typically, the data used to calculate the score for an expert include both feedback from other experts and feedback from customers whose customer service inquiries have been handled by the expert. Scores may be specific to specific topics. As such one expert may have several different expert scores for different topics (specialty characteristics). Scores are optionally further calculated based on certification and/or official status of an expert. In some embodiments, Scoring Logic 160 is configured to calculate scores for groups of experts, such as expert teams. Scores may be calculated based on an expert's contribution to nodes of a knowledge graph.

Response Management System 105 further includes Routing Logic 165 configured to route customer service inquiries to experts matched to the inquiries by Matching Logic 155. In some embodiments, Routing Logic 165 is configured to route the customer service inquiry to one of Expert Devices 115 and then further communication related to resolution of the inquiry occurs directly between the one of Expert Devices 115 and the originating member of Client Devices 110 (e.g., the member of Client Devices from which the inquiry originated). In some embodiments, Routing Logic 165 is configured to route the customer service inquiry to one of Expert Devices 155 and then route a response from the one of Expert Devices 115 back to the originating member of Client Devices 110. In these embodiments, Routing Logic 165 may route multiple communications between these devices to resolve a customer service inquiry.

In various embodiments, Routing Logic 165 is configured to route customer service inquiries to more than one expert (associated with more than one of Expert Devices 115). This can occur in various ways. For example, a customer service inquiry may be routed to different experts in a serial manner if a first expert, or set of experts, is unable to provide a satisfactory resolution for a customer service inquiry. The lack of a satisfactory resolution may be determined by the originator of the inquiry (requester) and/or by an elapsed time. A customer service inquiry may be routed to different experts in a serial manner if a first expert (or set of experts) refers the inquiry to a second expert. The second expert may take over responsibility for resolving the inquiry alone, or may work with the first expert to jointly resolve the inquiry. In one example, a response(s) produced by one set of experts may be given to a second set of experts for rating or to provide further input. Optionally, separate responses to an inquiry are provided by different sets (e.g., teams or groups) of experts.

In various embodiments, Routing Logic 165 is configured to route a customer service inquiry to more than one expert in parallel. As used herein, "parallel" routing means that the customer service inquiry is sent to a second expert without regard to whether a response (to the same inquiry) has been received from a first expert. This approach is optionally used to assure that at least one expert responds to the inquiry in a timely manner. For example, a customer service inquiry may be routed in parallel to several different experts identified by Matching Logic 155. The expert that responds first to the inquiry is then optionally assigned responsibility for responding to the inquiry, and the opportunity to respond to the inquiry is then typically withdrawn from other experts. In some embodiments, multiple customer service inquiries are sent to one expert and the expert has the opportunity to select which one he or she is best suited to respond to. In some embodiments, an inquiry is presented to multiple experts in parallel and one or more of these experts can respond to the inquiry. The multiple experts may be notified of more than one inquiry in parallel and each of the experts can then choose which one (or more) of the inquiries to respond to.

Routing Logic 165 is optionally configured to route customer service inquiries to Contact Center 125. This can occur, for example, if an expert refers the service inquiry to Contact Center 125, if an expert is unable to resolve an inquiry to a requester's satisfaction, if an inquiry is not resolved within a predetermined time period, if no expert having needed specialty characteristics is available, if topic characteristics of the inquiry require confidential account data not available to experts, and/or the like. In some embodiments, Routing Logic 165 is configured to route a customer service inquiry to Contact Center 125 if Enterprise 130 reports that there are currently unused service personnel at Contact Center 125. For example, if Enterprise 130 has an instance of Contact Center 125 including 30 service personnel that represent a sunk cost, then Enterprise 130 may wish to use these personnel rather than pay a cost of having the customer service inquiry sent to one of Expert Devices 115. Likewise, Routing Logic 165 may be configured to avoid routing customer service inquiries to Contact Center 125 at time that Enterprise 130 reports that no contact center service personnel are available. Routing Logic 165 may be configured to avoid routing customer service inquiries to Contact Center 125 that are originally received from requestors via Contact Center 125.

In some embodiments, Routing Logic 165 (or Matching Logic 155) is configured to consider a customer service inquiry (including content, requester profile, requester activity, expert activity, etc.) and three possible resource types to resolve the inquiry. The resource types can include 1) Automated answers, external experts and internal experts. Routing Logic 165 or Matching Logic 155 is optionally configured to determine which types are most useful/efficiently used. This determination can rely on either binary rules: i.e., don't use community members for password questions, don't use automated responses if the questions has high emotional context; or by probabilistic rules: i.e. use an automated response if confidence > 90%, or use a community member (external expert) if they've successfully answered over 50% of questions that look like this. The resources used to resolve a customer service inquiry can include more than one resource type. For example, all three types of resources may be used serially or in parallel. As is discussed elsewhere herein, the three types of resources may use a common communication channel and/or user interface.

In some embodiments, the ability of an expert to resolve a customer service inquiry can be determined by the requester and/or the expert. A requester may indicate that he or she is unsatisfied with a response provided by an expert and ask that the customer service inquiry be forwarded to Contact Center 125. An expert may determine that he or she is unable to properly respond to a customer service inquiry. The inability to properly respond may be, for example, because the inquiry has been improperly or incompletely characterized by Parsing Logic 140, because the expert is not qualified, because confidential information (e.g., account access) is required, and/or because there is no resolution to the inquiry. In various embodiments, if an expert is unable to respond to an inquiry the requester may forward the inquiry to Contact Center 125 and/or to another requester. In some embodiments, Routing Logic 165 is configured to automatically send a customer service inquiry to an internal expert if an external expert is unable to provide an adequate answer to the inquiry.

In some embodiments, Routing Logic 165 is configured to prevent routing of customer service inquiries including confidential information to external experts. For example, inquiries including an account number, social security number, telephone number, or any of the other personal/private information discussed herein, are optionally always routed to an internal expert. Parsing Logic 140 is optionally configured to identify which customer service inquiries are likely to require the use of confidential information and Routing Logic 165 can then route those inquiries to internal experts. For example, an inquiry that requests a change in mailing address or customer authentication may be directed to internal experts rather than external experts.

In some embodiments, Routing Logic 165 is configured to give priority to internal experts and then to route customer service inquiries to external experts when no internal experts are available. Matching Logic 155 may select specific internal and external experts, for routing an inquiry, using the same or different criteria.

In various embodiments, Routing Logic 165 is configured to select a human agent, e.g., an expert, based on an association between the human agent and specific nodes of the knowledge graph. For example, if a problem is identified with a responsive answer associated with a node/cluster or if there is a problem navigating from a cluster based on a customer message, then Routing Logic 165 may be used to select an expert from a plurality of alternative experts. This selection may be based on a specificity characteristic of the human expert and/or an association between the human agent and specific nodes of the knowledge graph. The human expert is selected for the purpose of improving the conversation with the client and possibly changing the knowledge graph accordingly.

In some embodiments, Routing Logic 165 is configured to identify an entry node of the knowledge graph. This selection may be made from a plurality of top-level clusters/nodes of the knowledge graph. The selection may be based on characteristics of the initial customer inquiry. For example, a top-level node may be selected on text or images within the initial customer inquiry. In one case, an inquiry including "My phone is broken" is assigned to a top-level node whose responsive message is configured to learn more about the state of the phone. Routing Logic 165 may further be configured to identify an entry node based on metadata related to the customer inquiry. As noted elsewhere herein, this metadata can include an identify of the customer, their purchase history, their service history, customer account information, customer location, a web page or app from which the customer inquiry is sent, and/or the like. In a specific example, a customer inquiry may come from a reservation website, the customer may have filled out a web form stating the she would like to change a reservation and entered a reservation number. This information may be used to select a top-level node at which to begin a conversation with the customer.

In some embodiments, a knowledge graph includes nodes that server as both top-level and intermediate nodes. A node that would be traversed in the middle of one conversation may be a starting point of another conversation. An example of this is a node dealing with a payment that may either be the point of an initial customer inquiry or the conclusion of a conversation about buying a product or service.

Matching Logic 155 and/or Routing Logic 165 optionally includes a machine learning system, e.g., a neural network or artificial intelligence system, configured to match and/or route customer service inquiries. As used herein, "machine learning system" is meant to include actual machine learning systems and/or other types of Bayesian/neural network/artificial intelligence systems. The machine learning system can include hardware, firmware, and/or software stored on a computer readable medium, and is optionally configured to be trained using training data to produce desired functionality. These requests may be routed to internal experts, external experts, automatic response systems, or any combination thereof. A trained machine learning system may include parts specific to a particular Enterprise 130, parts specific to particular request topics, and/or more general parts. The machine learning system may be trained to receive contents of (and/or metadata associated with) a customer service inquiry and to determine if automated response logic should receive the request. The machine learning system may output an estimated response score, a Boolean determination, a probability, the identity of a preferred automated response logic, and/or the like.

Response Management System 105 further includes a Routing Data Storage 170 configured to store logs of inquiry routing. Routing Data Storage 170 includes non-transitory memory specifically configured to store information relating to current and/or past routing. The memory is thus configured via data and file structures. For example, Routing Data Storage 170 can include an expert relational database in which data structures are defined to store routing data. The stored routing data includes information such as which Expert Devices 115 received customer service inquiries from which Client Devices 110, how many inquiries were routed, the source and destination of any answers to these inquiries, how many answers were routed, which experts forwarded inquiries, where the inquiries were forwarded to, and/or the like. In some embodiments, routing data storage is configured to store logs of customer service inquiries that were routed to more than one human expert (in parallel and/or serially) and/or inquiries that were routed to Contact Center 125.

In some embodiments, content from automated response logic, internal experts, and/or external experts is presented to customers within a first chat window on Client Device 110A, and/or also within a second chat window on Expert Device 115A (used by an external expert, and/or also on Expert Device 115B (used by an internal expert). In these cases, optional Filtering Logic 117 may be configured to selectively filter the content presented on the different devices. For example, the most personal information, such as social security numbers, may only be seen by the customer, and personal information such as account balances and personal address may only be seen by the customer and internal expert. Filtering Logic 117 can remove personal private information from a version of the multi-party conversation seen by the external expert and/or internal expert. For example, if a customer requests access to medical information the information my be presented to the customer but not the expert. Likewise, if the customer enters an account number or a social security number, this may be used by Enterprise 130 but not seen by the expert. Filtering can be configured to block a private or sensitive information, including but not limited to sensitive personal data, health data, personal identifiable information, financial data, family data, religious data, etc. Filtering may be applied at any point in a conversation between a customer and an expert.

In some embodiments, Filtering Logic 117 is configured to be predictive and to anticipate when a customer is likely to send private or sensitive information. For example, it can be predicted that a customer is likely to send private information at certain nodes within the knowledge graph disclosed herein. When, or before, a conversation reaches these nodes, Filtering Logic 117 is optionally configured to transfer the conversation to an internal expert or to Enterprise 130 for continuation at Contact Center 125. In this way, Response Management System 105 can avoid receiving the private or sensitive information.

In some embodiments, Response Management System 105 further comprises Reward Logic 180 configured to provide a reward an expert as consideration for providing one or more answers to a customer service inquiry. This reward is optionally a monetary reward and may be in a virtual currency. The reward is typically paid to an account of an expert. In some embodiments, the reward is specified by Enterprise 130. For example, Enterprise 130 may provide a predetermined monetary reward for each customer service inquiry resolved by experts via Response Management System 105. Enterprise 130 may specify a budget for resolving customer service inquiry and Reward Logic 180 may be configured to provide rewards to experts based on this budget. The amounts of rewards received by experts is optionally dependent on the rating of the response by the requester and/or other experts, dependent on the topic characteristics of the inquiry, on the amount of time and/or number of experts that contributed to the response, on the score of the expert, on the response time of the expert, on whether the customer service was forwarded (and whom it was forwarded to), on contact center capacity and utilization, on time of day, on time of year, etc. In some embodiments, Reward Logic 180 is configured to split rewards between collaborating experts. An expert may share in a reward as a result of a referral and/or collaboration. Thus, an expert may be entitled to a reward for any contribution to the workflow related to customer service inquiries, or similar tasks. In an illustrative embodiment, an external expert may be rewarded for modifying and/or merely approving draft answers. Reward Logic 180 is typically configured to track relative contributions of individual experts to an automated response, and to track performance (use and scoring) of the automated response. Examples of agent contributions include wording of complete and/or partial responses and tasks that contribute explicitly and/or implicitly to the training of a neural network/machine learning system/artificial intelligence system that serves automated responses, such as rating and reviewing past interactions between users and the automated responses, reviewing and approving clusters of frequently asked questions suggested by the machine learning/artificial intelligence system, etc.

In some embodiments, Reward Logic 180 is configured to provide a reward specified by the source of a customer service inquiry. For example, a requester may designate a reward amount prior to the inquiry being routed to an expert or may designate, after the inquiry is resolved, a reward (tip) to be paid to the expert that resolved the inquiry by providing a satisfactory answer. In some embodiments, experts can bid to receive customer service inquiries, the result of the bidding being based on the lowest bid and/or the experts' scores. For example, the expert willing to be paid the lowest amount (as normalized by expert score) to resolve the inquiry is considered the bidding winner. The winner of the bidding, as determined by Reward Logic 180, receives the customer service inquiry.

In various embodiments, rewards are provided when an external expert's answer is used to train an artificial intelligence system (or other type of machine learning system), an expert contributes to identification, merging or refinement of clusters of answers, and/or when content from the external expert's answer is reused by inclusion in another answer and/or expert support content. For example, if a response receives a particularly high score (as determined by Scoring Logic 160) then that response may be used to train a machine learning system. Such use may justify that a reward be provided to the human expert that first generated the response. Rewards can include publicity, cash, credits, non-profit donations, and/or any other consideration. Rewards may be provided for tasks that contribute explicitly and/or implicitly to training of the neural network/machine learning system/artificial intelligence system. Also, Reward Logic 180 may distribute these rewards based on experts' relative contribution to performance of automated responses.

In some embodiments Reward Logic 180 is configured to provide a reward related to customer support content. This reward may be for generation of customer support content, for example, writing blog entries or articles. The reward may be based on use of the customer support content to resolve customer support inquiries before they are passed to Response Management System 105 and/or before they require preparation of a response by an expert. A reward may also be given to an expert for rating and/or classifying customer support content. In one example, an expert may be asked to rate the suitability of an item of customer support content for resolving a specific customer support inquiry and/or a cluster of customer support inquiries. An expert may be asked to classify an item of customer support content, for example, to indicate that the content is suitable for a specific model of a product or for resolving a problem in a specific location. In one example, an expert is asked to edit or otherwise improve an item of customer support content. In one example, an expert is asked to identify customer support content that is out of date and/or no longer valid. Rewards may be given to an expert for their contribution in any of these examples. The amount and/or type of reward is optionally dependent on how often the customer support content is used, customer feedback, and/or confirmation by other experts.

Content provided by more than one human expert may be used to generate at least a partial response to a customer service inquiry. In such a case, rewards provided by Reward Logic 180 are optionally prorated among the experts based on their relative contributions, e.g., the fraction of an automated response that includes each experts' contribution. Rewards based on use of automated responses are optionally prorated based on a time elapsed since the used content was first provided by a human expert. Typically, content that was provided on a more distant date would be entitled to a lower reward. Rewards are optionally based on both a score calculated using Score Logic 160 and inclusion of content in customer support content.

Response Management System 105 optionally further comprises Response Logic 183 configured to provide automated responses (responsive messages) to messages received from a customer. These automated responses are optionally answers to customer messages received as part of a conversation between Response Management System 105 and the customer. As discussed elsewhere herein, the responses are can be associated with clusters and nodes of a knowledge graph. In this case, the responses are selected by navigating between the clusters/nodes of the knowledge graph, the navigation being based on messages received from the customer.

Response Management System 105 is configured to navigate to a next cluster/node based on an assignment of the most recently received customer message to the next cluster in the graph; and then to extract a responsive message from the next cluster and send this message to the customer. A conversation is generated as further messages are received from the customer, assigned using Cluster Logic 127, and this process is repeated.

In some embodiments, Response Logic 183 is further configured to receive assistance from a human agent, e.g., an expert, for the navigation between nodes and/or the refinement of responsive messages. For example, an expert may provide an alternative responsive answer in a particular instance and this alternative may be provided to the customer in place of the responsive answer associated with the current node/cluster. As such, Response Logic 183 may be configured to switch between providing answers from nodes of the knowledge graph to providing answers from a human agent. For example, if a message from a customer cannot be assigned to a next note/cluster at at least a minimum level of confidence that the assignment is appropriate, Response Logic 183 may be configured to pass the conversation to a human agent. If an acceptable response is not generated by the automated system, Response Logic 183 can pass the conversation to an expert using one of Expert Devices 115. The expert can review the conversation history and provide a custom response. The expert may be presented with the responsive messages of a variety of nearby nodes and choose which one is best for the current conversation. This process may be used to establish new paths between nodes of the knowledge graph.

In some embodiments, Response Management System 105 further comprises a Response Log Storage 185. Response Log Storage 185 includes non-transitory memory specifically configured to store responses to customer service inquiries, including responses provided by experts. The memory is thus configured via data and file structures. For example, Response Log Storage 185 can include a relational database including data records configured to store responses in a chronological order. The data records may be configured to store a conversation between a requester and one or more experts wherein each party provides content in the form or audio, text and/or video. In some embodiments, Response Log Storage 185 is further configured to store the conversations discussed herein.

In some embodiments, some or all responses stored in Response Log Storage 185 are available to a requester on a historical basis, e.g., the requester can review a history of responses provided to the requester and/or responses provided to other requesters. In some embodiments some or all responses stored in Response Log Storage 185 are available to experts, other than the experts that provided the responses. For example, responses may be made available to experts for the purpose of rating the responses, and/or to facilitate the use of the stored responses to respond to further customer service inquiries. In some embodiments, an expert may be rewarded (e.g., given a higher score) for providing a response that is used by other experts to resolve other customer service inquiries. In some embodiments, responses stored in Response Log Storage 185 are provided to Enterprise 130 such that Enterprise 130 can improve the knowledge base used by Contact Center 125.

Response Management System 105 optionally further includes Training Logic 147. Training Logic 147 is configured to train an artificial intelligence system and/or other machine learning systems, including those that are optionally included in Cluster Logic 127, Matching Logic 155, Parsing Logic 140, and/or Routing Logic 165. Training Logic 147 is configured to train these machine learning systems based on customer service inquiries, responses to these customer service inquiries, and/or scores generated using Scoring Logic 160 and associated with respective member of the responses. For example, Training Logic 147 may be configured to train machine learning systems within Cluster Logic 127 for identifying clusters of customer messages and/or for assigning new customer messages to the identified clusters.

In some embodiments, Training Logic 147 is configured to develop the knowledge graph discussed herein. In this case, multiple conversations between customers and human agents and/or conversations between customers and automated response systems can be used as training data. Training Logic 147 may train Cluster Logic 127 to identify clusters of customer responses at various stages of the conversation, the identification being different at the beginning of a conversation relative to the end of a conversation. In addition, Training Logic 147 may be used to determine initial paths between nodes/clusters of the knowledge graph. This determination may be based on statistical analysis of the training data, machine learning and/or the like. In addition, Training Logic 147 may be configured to identify which nodes of the knowledge graph are top-level nodes at which a conversation may be initiated. Building the knowledge graph includes assignment of clusters of customer messages to nodes, establishing links between the nodes, associating one or more responsive message with each cluster/node, and determining top-level clusters.

In some embodiments, Training Logic 147 is configured to receive messages from or moderated by human experts. For example, a human expert may suggest or change messages to be sent to customers. These messages can include questions to ask customers and intended to help resolve a customer's issue or need, and/or these messages can include answers to customer inquiries.

In some embodiments, Training Logic 147 is configured to re-train an existing knowledge graph from a first customer support domain to a second customer support domain. For example, a knowledge graph configured for supporting an airline reservation system may be used as a starting point for developing a new knowledge graph for supporting a room reservation system. In another example, a knowledge graph configured for supporting a hotel reservation system may be re-trained by Training Logic 147 for supporting a shared housing reservation system. The first and second support domains may be associated with different business entities.

Expert Management System 105 optionally further includes Healing Logic 187. Healing Logic 187 is configured to correct or adapt the knowledge graph by identifying and updating nodes of the knowledge graph that produce undesirable results. This correction includes identifying these nodes and optionally engaging a human expert to modify the identified nodes.

There are a variety of (non-exclusive) ways in which nodes may be identified as producing undesirable results. For example, poorly performing nodes can be detected by failures to assign a customer message to a next node within a desired level of confidence; poorly performing nodes can be detected by negative feedback from customers; poorly performing nodes can be detected by delays in messages in a conversation; poorly performing nodes can be detected by failure to resolve customer issues; poorly performing nodes can be detected by failures at subsequent nodes in a conversation; poorly performing nodes can be detected by review of conversations by experts, and/or the like. For example, in some embodiments, a quality control review of conversations focuses on those that generated suboptimal feedback from customers and human experts identify those nodes/clusters traversed in these conversations that present opportunities for improvement.

Healing Logic 187 may be configured for a human expert to change connections between nodes, to change the criteria by which subsequent clusters are selected, to change responsive messages to be sent to customers, to create new nodes and associated clusters, to split or eliminate clusters, etc. For example, if a new product is produced by a company, previously unknown customer service inquiries may result. These new inquiries will be identified by Healing Logic 187 as the existing knowledge graph may fail to resolve them. An expert can then add new nodes and paths connecting those nodes so as to adapt the knowledge graph to the new circumstances. In a practical example, the new inquiries will begin a conversation that traverses the knowledge graph to a point where there is an inadequacy in the automated response. At that point, Response Logic 183 hands the conversation to a human agent who continues the conversation by manually providing response messages to the customer. After this has occurred a number of times, Healing Logic 187 may suggest that the manually provided response messages be associated with new clusters/nodes of the knowledge graph. This addition of clusters/nodes can be automatic, or can be initiated and/or reviewed by a human agent.

Healing Logic 187 my used Routing Logic 165 or Matching Logic 155 to select a human expert to engage for the purposes of correcting or adapting the knowledge graph. This selection can be based on any of the criteria discussed elsewhere herein. For example, a human expert may be selected based on the domain expertise of the expert. With regards to the knowledge graph, an expert may also be selected based on how specific particular nodes are (their "specificity levels"). For example, at the start of a conversation, corresponding to upper level nodes, a broad knowledge may be preferred. As the conversation progresses, corresponding to lower level nodes, a more specific knowledge may be preferred. In some embodiments, specific experts or groups of experts may be pre-associated with specific nodes of the knowledge graph.

Response Management System 105 further includes at least one Processor 192. Processor 192 is an electronic and/or digital processor including circuits configured to execute at least Cluster Logic 127, Response Logic 183, and/or Healing Logic 187.

Any of the machine learning systems within Response Management System 105 may be trained based on scores determined using Scoring Logic 160 as described elsewhere herein. Such training is optionally ongoing. For example, a trained machine learning system may be further refined as additional customer service inquiries are received and resulting responses are scored. Further, the training can be based on any of the characteristics of a customer service inquiry. For example, Training Logic 147 may use metadata associated with an inquiry, an identity of a source of the inquiry, an identity of an Enterprise 130 to whom the inquiry is directed, a communication channel (e.g., internet, chat, phone, etc.) over which the inquiry is received, an inquiry history, characteristics of specific human experts, inquiry contents (e.g., text or images), time of day/date, and/or the like. Training Logic 147 includes hardware, firmware, and/or software statically stored on a computer readable medium.

Customer Service Knowledge Base 106 may be included in the same computing device as part of Response Management System 105 or in a separate computing device. Customer Service Knowledge base 106 includes a Storage 107 configured to store customer service content. Storage 107 can include any type of non-transient computer readable storage medium, such as random access memory, an optical drive, a disc drive, static memory, etc. Storage 107 is configured to store customer support content using data structures and/or formatting suitable for such content. The stored customer support content can include articles, webpages, blogs, and/or any of the other types of documents discussed herein. The stored customer support content is optionally accessible via network addresses such as internet protocol (IP) addresses, universal resource locators (URLs), and or the like. For example, the content may be organized into browsable and/or searchable web pages. In some embodiments, customer support content includes links to third party content, such as a Wikipedia page or a government website.

Customer support content is typically associated with metadata characterizing the content. For example, an article may be stored in association with cluster identifiers, tags, titles, ratings, etc. The metadata is optionally provided by experts associated with Response Management System 105. Customer support content is optionally associated with one or more clusters of customer support inquiries.

Customer Service Knowledge Base 106 further includes Content Selection Logic 108. Content Selection Logic 108 is configured to select customer service content from Storage 107. This selection may be based on the metadata associated with the customer service content, activity of a customer, text provided by a customer, a customer's profile, and/or the like. For example, Content Selection Logic 108 may be configured to select customer service content based on a browsing history, purchase history, inquiry history, and/or other past activity of a customer. Content Selection Logic 108 may be configured to select customer service content based on all or part of a customer service inquiry. For example, content may be selected based on one, two or more words included in a customer service inquiry. This selection can occur as a customer is providing the customer service inquiry and be updated as the customer provides additional words. Content Selection Logic 108 is optionally configured to select customer service content based on feedback, scores, and/or other types of ratings received from customers and/or experts.

Customer Service Knowledge Base 106 optionally further includes Qualification Logic 109. Qualification Logic 109 is configured to enable experts to contribute to customer service content. For example, an expert may assign an item of content to a cluster, provide tags and/or topic identifiers to content, may curate content, may edit content, may score content (e.g., using Scoring Logic 160), may rate and/or approve content, and/or the like. Experts may also provide customer service content, or links thereto, as part of a response to a customer service inquiry. As discussed elsewhere herein, experts are optionally provided with a reward using Reward Logic 180 for such activity.

Content Selection Logic 108 is optionally included in embodiments of Matching Logic 155.

In various embodiments, Client Devices 110 include Control Logic 111 and Display Logic 112. Control Logic 111 is configured to provide customer support content to a customer, typically prior to sending a related customer service inquiry to a human expert, e.g., to Response Management System 105 to be routed to an expert using Routing Logic 165. For example, Control Logic 111 may be configured to provide a set of customer support content as a set of links on which a customer can click to view each item of content in detail.

Display Logic 112 is configured to display one or more links to the customer support content and a text input field, to the customer. The links are selected from Storage 107 and selected using Content Selection Logic 108, and provided by Control Logic 111. The text input field is configured to receive a customer service inquiry from the customer. The inquiry may be sent to Customer Service Knowledge Base 106 and/or Response Management System 105. Display Logic 112 is optionally further configured to display an identity of a human expert (e.g., a name or picture) and/or a conversation between the expert and the customer.

In various embodiments, Control Logic 111 is configured to process text provided by a customer one piece at a time, e.g., one character, one word or one phrase at a time. For example, the inquiry "How do I reset my modem password," can be processed by Control Logic 111 as it is being type into the text input field. As each piece of the customer support inquiry is typed that piece may be sent to Customer Service Knowledge Base 106 and the list of content is updated. As such, this processing can include selection and display of links to customer support content on a subset of the customer inquiry. Specifically, the words "How do I reset" for a customer who has been navigating web pages related to modems and/or who has just purchased a modem may be sufficient to select and display links to customer support content. As the customer continues to type "my modem" and "password," these phrases are sent to Customer Service Knowledge Base 106 and the displayed list of links may be updated.

When the customer is finished entering their customer support query, the customer sees a list of customer support content that may resolve their inquiry. In addition, Control Logic 111 is configured to provide the customer with an option of sending the inquiry to an expert managed by Response Management System 105, to be routed to an expert as discussed elsewhere herein. It is desirable but not necessary that the inquiry be sent to the expert after the customer has had a chance to review the presented list of customer service content. In some embodiments, a customer has a choice of sending the inquiry to an expert or selecting one of the displayed links to customer service content. In some embodiments, Control Logic 111 is configured such that a customer is required to review customer service content (or a list thereof) before the customer can send their customer service inquiry to an expert.

Control Logic 111 is optionally further configured to track activity of a customer. For example, Control Logic 111 may be used to track browsing activity of the customer in a website managed by Enterprise 130. In some embodiments, the expert that receives the customer service inquiry also receives the list of customer service content selected using Content Selection Logic 108.

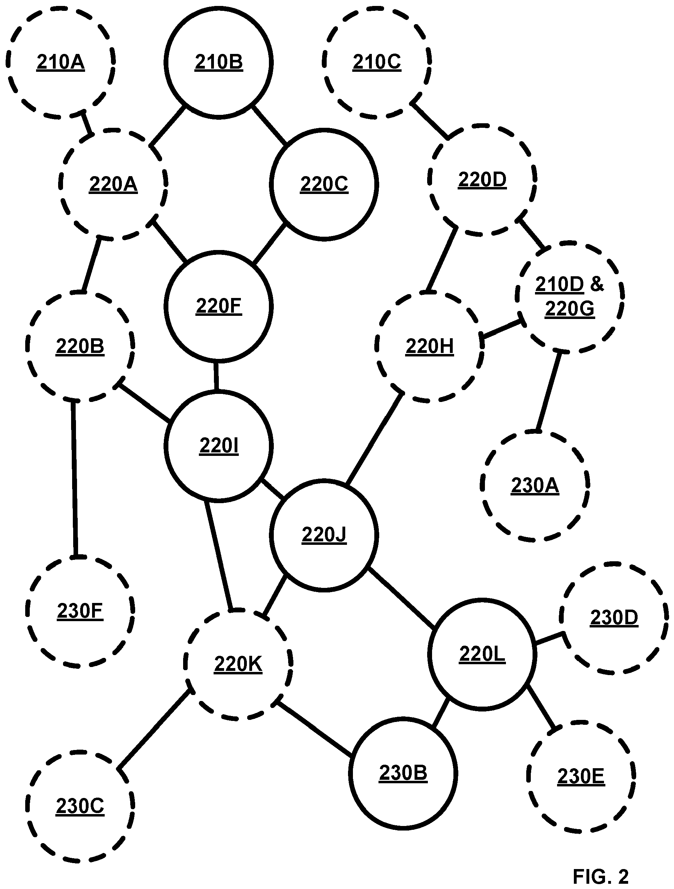

FIG. 2 illustrates a path of a conversation through a knowledge graph, according to various embodiments of the invention. This path and knowledge graph are highly simplified for the purposes of example. The conversation may be initiated, for example, by a customer at a troubleshooting webpage associated with Enterprise 130. On this page the customer provides their phone number, login credentials, and an indication of which phone is having a problem. This metadata and the identity of the webpage are used to select Top-Level Node 210B (Top-Level nodes being individually designated 210A, 210B, 210C, etc.), from among a plurality of top-level nodes, for entry into the knowledge graph. This node can be associated with a response message: "What seems to be wrong with your phone," which is communicated to the customer using Response Logic 183.

In response, the customer messages "It is broken." This message is parsed using Parsing Logic 140 and then used by Cluster Logic 127 to select one of the Intermediate Nodes 220 (individually designated 220A, 220B, 220C, etc.) having a direct path to Top-Level Node 210B. In the illustrated example, Intermediate Node 220C is associated with a cluster that is the best match to "It is broken." Cluster Logic 127 is then used to navigate to Intermediate Node 220C. Intermediate Node 220C is associated with the responsive message "Is there physical damage or a software problem?" which is then sent to the customer. The customer then messages, "I dropped it, the screen is cracked." Again, this message is parsed using Parsing Logic 140 and Cluster Logic 127 is used to identify the next Intermediate Node 220 that has a path to Intermediate Node 220C and whose cluster best matches the message received from the customer. In the example shown, Intermediate Node 220F is selected and this node is associated with the responsive message "Depending on the amount of damage the screen may be repairable; would you like to schedule a repair session with a technician?", which is sent to the customer.

In summary the conversation proceeds as follows:
*(Node 210B) Service:* What seems to be wrong with your phone?
*Customer:* It is broken
*(Node 220C) Service:* Is there physical damage or a software problem?
*Customer:* I dropped it, the screen is cracked
*(Node 220F) Service:* Depending on the amount of damage the screen may be repairable; would you like to schedule a repair session with a technician?
*Customer:* No
*(Node 2201) Service:* I see that your phone is covered by insurance, would you like it replaced?
*Customer:* Yes
*(Node 220J) Service:* There will be a $99 deductible, how would you like to pay, credit card or PayPal?
*Customer:* Can I just charge it to my credit card?
*(Node 220L) Service:* Sure, please confirm the last for digits of your Plumb Pay account. *Customer:* 9876
*(Node 230B) Service:* Thank you, a return authorization form is being sent to your registered e-mail. Please return your phone to that address. A replacement phone will be sent to your billing address. Is there anything else I can help you with?
*Customer:* Can I get an upgrade?

At each step a path is navigated through the knowledge graph until the Leaf-Node 230B is reached and the message "Thank you, a return authorization form is..." is sent to the customer. The customer then responds with the question "Can I get an upgrade?" In some embodiments, this results in selection of a new Top-Level Node 210 and a conversation about upgrades occurs using the same process. The new Top-Level Node 210 is optionally selected based in part on the preceding conversation.

At each node there a variety of messages that may be received from customers. For example, at Top-Level Node 210B the customer may respond "It is broken," "It won't charge" or "I cannot unlock it." Of course, at each node there can be many more responses, and clusters of responses than are illustrated in FIG. 2.

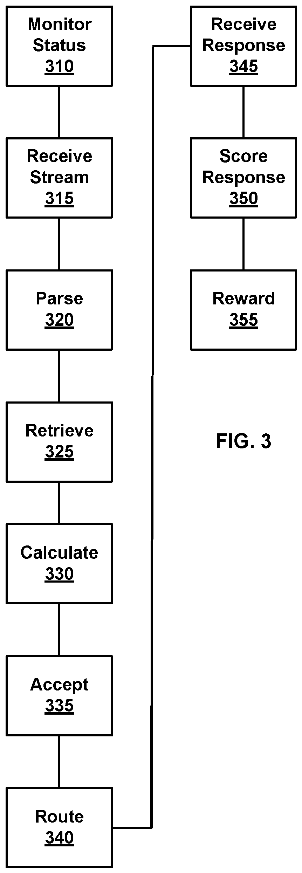

FIG. 3 illustrates a method of processing a customer service inquiry, according to various embodiments of the invention. These methods are optionally performed using Response Management System 105. When a stream of customer service inquiries is received from Client Devices 110 the methods of FIG. 3 may be used to determine which of the inquiries should be accepted and processed by Response Management System 105 and which are better resolved at Contact Center 125 (optionally under control of Enterprise 130).

In a Monitor Status Step 310 the status of a plurality of human experts is monitored. This step is optionally performed using Status Logic 145. The status can include whether a particular human expert is connected to Response Management System 105 via one of Expert Devices 115, whether the expert is currently engaged in responding to customer service inquiries, the specialty characteristics of available internal and external experts, and/or the like.

In a Receive Stream Step 315 a stream of customer service inquiries is received. These are typically received from Client Devices 110 via Network 120. In some embodiments, some of the customer service inquiries are received from Enterprise 130 and/or Contact Center 125.

In an optional Parse Step 320 each member of the customer service inquiries is parsed. Typically, the parsing is performed using Parsing Logic 140. The parsing is configured to determine one or more topic characteristics for each of the customer service inquiries. The parsing may also be used to identify metadata associated with the customer service inquiries.

In an optional Retrieve Step 325 data regarding each of the plurality of experts is retrieved from data storage. The retrieved data can include specialty characteristics, expected rewards, location, communication bandwidth, expert scores, and/or the like, regarding each of the plurality of experts.

In a Calculate Step 330 a probability that each (or any) of the plurality of experts can resolve each of the customer services inquiries is calculated. The calculation is optionally based on the topic characteristics of each inquiry, the specialty characteristics of each of the plurality of experts, and/or other data related to the human experts. In some embodiments, Calculate Step 330 includes a calculation of a probability that an automated response system will be able to answer each of the customer service inquiries, respectively.

In an Accept Step 335, a subset (or all) of the plurality of inquiries is accepted. In some embodiments, the subset is selected by comparing 1) a threshold and 2) the calculated probability of each inquiry being resolved by a human expert (e.g., by members of the plurality of experts). In other embodiments, the subset is selected by comparing 1) a threshold and 2) the calculated probability of each inquiry being resolved by automated response logic. A machine learning system may be applied to each customer service inquiry and data characterizing members of the plurality of experts retrieved in Retrieve Step 325.

In a Route Step 340 each member of the subset accepted in Accept Step 335 is routed to at least one of the plurality of experts and/or automatic response logic. Route Step 340 is optionally performed using Routing Logic 165, as discussed elsewhere herein. Routing Logic 165 may use a trained machine learning system for this purpose.

In an optional Receive Response Step 345, a response to one or more members of the subset of the plurality of inquiries is received. The response may be a complete response or a partial response. For example, the response may be a complete response that is ready to be provided to a requester; or the response may be a partial response including content received from one or more of the plurality of experts and/or received from automated response logic. Complete responses may be automatically communicated to a requester. As is discussed elsewhere herein, a response may include contributions from both human expert and automated systems. A human expert may modify a partial response provide by an automated system. Completed responses are optionally sent directly to request sources, e.g., sent to Enterprise 130, Contact Center 125, and/or members of Client Devices 110. Partial responses are not typically sent directly to Client Devices 110, although they may be sent to Enterprise 130 and/or Contact Centers 125 for modification and/or approval.

In an optional Score Response Step 350, the response received in Response Step 345 is scored using Scoring Logic 160. The scoring can be based on any of the criteria discussed herein with regard to Scoring Logic 160. Both human and/or automated contributions to a response may be scored. The scores are typically intended to be a measure of a quality of the response.

In an optional Reward Step 355, a reward is provided to one or more of the plurality of experts. The reward is compensation for contributing to a response to one of the subsets of customer service inquiries. The reward is optionally a financial reward. The reward may be for contributing all or part of a response. More than one of the plurality of experts may receive a reward for contributing to the same response. In some embodiments, the reward is made for a contribution to response content that is later included in customer support content. For example, a first human expert may contribute to a response to a first customer service inquiry. The first human user can receive a reward for this contribution, e.g., based on a good score etc. That contribution can then be incorporated in customer support content. When the stored response is later used (again) as customer support content, the first human expert can then receive an additional reward for the later use of the contribution. The first human expert can receive repeated rewards (2 or more) for a contribution that is used repeatedly (2 or more times) to respond to customer service inquiries from different sources, e.g., different members of Client Devices 110.

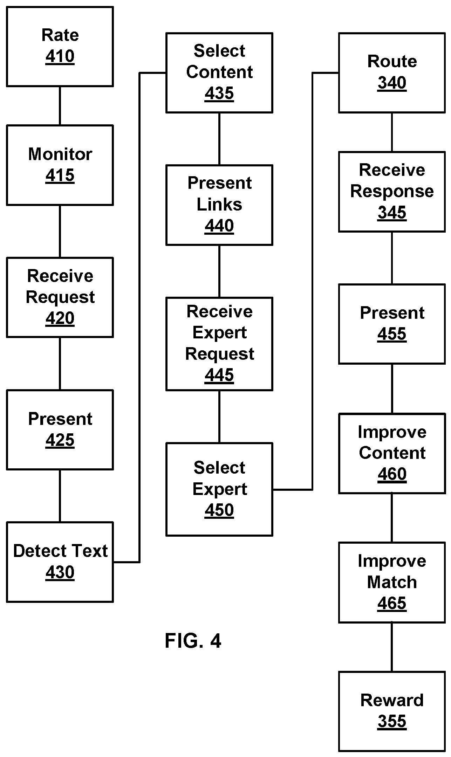

FIG. 4 illustrates methods of automatically avoiding tickets, according to various embodiments of the invention. In these methods, tickets are avoided by offering a customer links to customer support content, optionally in a same interface as a text entry field for entering a customer support inquiry is displayed. This list may be displayed and/or updated as text is entered in the text entry field. The customer support content is optionally rated and/or approved by an expert, for example using Response Management System 105.

In an optional Rate Step 410, a rating for an item of customer support content is received from an expert. The expert is optionally one of a plurality of experts managed using Response Management System 105. The rating can include assignment of the item to a cluster of customer service inquiries, an indication of suitability of the item for resolving a particular customer service inquiry and/or a class of customer service inquiries. The rating is optionally generated using scoring Logic 160.

In an optional Monitor Step 415, activity of a customer is monitored. This activity can include website navigation patterns, purchases, social media activity, and/or any other activity discussed herein. Results of the monitoring can be stored on an instance of Client Devices 110 used by the customer and/or on Customer Service Knowledge Base 106. The monitoring is optionally performed using Control Logic 111.

In a Receive Request Step 420, a request for customer support is received at Client Device 110A. This request may include, for example, clicking on a "Help" or question mark link. Alternatively, the request may be received as a result of execution of a command in an application. In a specific example, Receive Request Step 320 may include a customer clicking on a help link within a website managed by Enterprise 130. This website (and browser used to view the website) can include elements of Control Logic 111 and Display Logic 112. The request may be initiated by a user entering text in a text entry field of a search box or ticket entry form.

In an optional Present Step 425, a customer service request interface is presented to the customer. The request interface includes at least a text entry field configured for the customer to enter a customer service inquiry. The request interface is also configured to display a list of customer support content, e.g., a set of links to customer support content. Present Step 325 is optionally performed using Display Logic 112. Present Step 325 is optional in embodiments in which the service request interface is available by default. For example, if a search box is an integral part of a website.

In a Detect Step 430, entry of text (by the customer) is detected in the text entry field. The text including at least part of a customer service inquiry. The detection typically occurs as the text is being entered and continues until all of the customer service inquiry has been entered. Detect Step 430 is optionally performed using Control Logic 111.

In a Select Content Step 435, customer support content is selected based on at least the entered text. As noted elsewhere herein, this selection may be further based on activities of the customer, e.g. website navigation, past product purchases, and/or contents of a shopping cart. The selection can be based on one piece, a plurality of pieces and/or all of the customer support inquiry. For example, if Control Logic 111 is configured to send the first two words entered by the customer, and then each additional word typed, the selection can first be based on the first two words and then the first three words and then the first four words, etc. In some embodiments, the selection of customer support content is further based on ratings and/or other metadata provided by an expert using Response Management System 105 and associated with the customer support content. Select Content Step 335 is optionally performed using Content Selection Logic 108.

In a Present Links Step 340, links (or other pointers/addresses) to the selected customer support content are displayed to the user. This typically occurs in the same interface, e.g., window, as the text entry field. The links are optionally presented as the customer is entering (additional) text in the text input field. Present Link Step 340 is optionally performed by sending the links to Display Logic 112.

Detect Text Step 430, Select Content Step 435 and Present Links Step 440 are typically repeated as long as new text is being entered in the text input field. As such, the list of links presented can be updated every time a new piece of the customer support inquiry is provided by the customer.

In an optional Receive Expert Request 445, a request is received from the customer to send the customer service inquiry to an expert management system configured to manage a plurality of experts, e.g., to Response Management System 105. This typically occurs after presenting the links to the selected customer support content in the customer service request interface. The request may be initiated by clicking on a button or entering a carriage return, etc. Receive Expert Request 445 is optionally performed using Display Logic 112.

In an optional Select Expert Step 450, a member of a plurality of experts is selected based on the customer support inquiry (or a topic or cluster thereof) and optionally an expertise of the expert. As noted elsewhere herein, the selection is also optionally dependent on a score of the expert. The expert is selected to respond to the customer service inquiry. In some embodiments, an automatic response system may be selected rather than a human expert.

In an optional instance of Route Step 240, the customer service inquiry is routed to the expert (or automated response logic) selected in Select Expert Step 450. Further details of Route Step 340 are discussed elsewhere herein, for example with respect to FIG. 3. Select Expert Request Step 345 is optionally part of Route Step 240 and may be performed using Matching Logic 155 and/or Routing Logic 165.

In an optional instance of Receive Response Step 245, a response to the customer service inquiry is received at Client Device 110A rom the selected expert or automated response logic. Further details of Receive Response Step 245 are discussed elsewhere herein, for example with respect to FIG. 3.

In an optional Present Step 455, the received response is presented to the customer that provided the customer service inquiry. The response is optionally presented in the same service request interface that includes the text entry field and that was used to display the links to the selected customer support content.

Present Step 455 optionally includes receiving a response and/or feedback from the customer regarding the customer support content. This feedback can take a variety of forms. For example, a customer may indicate that customer support content satisfies their customer support inquiry by clicking on a button labeled "issue resolved" or just by not sending the customer support query for real-time response by an expert. A customer may provide an indication of their perceived value of the customer service content by selecting it from a list of alternative support content, by spending an amount of time reading the customer support content, by providing a specific rating (e.g., 3 of 5 stars), by responding to a follow-up e-mail or correspondence, and/or the like.

In an optional Improve Content Step 460, an expert is asked to review the quality of customer support content, such as that presented to a customer in Present Step 455. The expert may be asked to rate the accuracy, quality, and/or other aspect of the content. Improve Content Step 360 optionally includes providing customer support content to an expert for editing. The review of the quality may or may not be tied to a specific customer support inquiry.

In an optional Improve Match Step 465, an expert is asked to provide input to better match customer support content to customer service inquiries. This input can include tags, summary or other input characterizing the customer support content. This input can also include a rating of the suitability of the customer support content for resolving specific customer support inquiries or clusters thereof. For example, an expert may be presented with a list of customer support inquiries and asked which, if any, of them can be resolved by a particular instance of customer support content. Alternatively, an expert may be presented with a customer support inquiry and be asked which of several alternative customer support content would best satisfy the inquiry.

In an optional instance of Reward Step 355 one or more experts are provided with a reward. The reward may be for providing a response to the customer service inquiry or for contributing to customer support content viewed by the customer. For example, the reward may be for improving content in Improve Content Step 460 and/or for classifying content in Improve Match Step 465. The reward may also be based on a response from the customer received in Present Step 455. In various embodiments, an expert may contribute, e.g., using Qualification Logic 109, to customer support content by authoring or improving the customer support content and/or by helping identify which customer support inquiries would best be matched to the particular customer support content. For example, an expert may edit customer support content to improve its accuracy and thus receive a reward. An expert may help identify which customer support inquiries are best resolved using the customer support content to improve its use and thus receive a reward. The identification of which customer support inquiries are best resolved using the customer support content can include classifying of the customer support content and/or assignment of the content to a cluster of customer support inquiries. For example, Qualification Logic 109 may be used to present an expert with a set of alternative customer support content and rate which content is most likely to resolve a customer support inquiry. The expert may be rewarded for this task using Reward Logic 180.

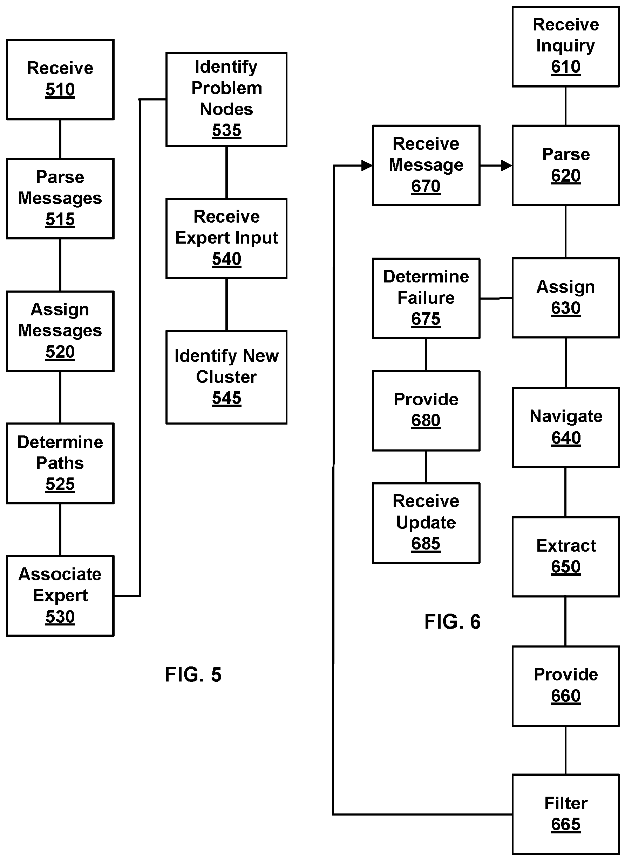

FIG. 5 illustrates methods of training an automated customer response system, according to various embodiments of the invention. This training includes identifying multi-level clusters of messages in conversations and building a knowledge graph representative of the contents of the conversations. The resulting knowledge graph can be navigated to provide automated responses to customer messages in a conversation.

In a Receive Step 510, a plurality of customer support conversations is received for use as training data. Each of the conversations includes an ordered exchange of messages between at least one customer and a source of responses. The conversations may include conversations between a customer and a human agent and/or between a customer and an automated response system. Typically, the conversations are applicable to a particular customer support domain.

In a Parse Messages Step 515, the received messages are parsed using Parsing Logic 140 to identify objects within the messages and/or subject matter of the messages.

In an Assign Messages Step 520, the messages are assigned to clusters having a common meaning and/or subject matter, optionally using Cluster Logic 127. The clusters are connected as nodes in a multi-dimensional knowledge graph as discussed herein. Each of the clusters is associated with a responsive message to be sent to the customer, and/or an action. For example, various messages related to requesting an account balance may be assigned to a common cluster. In some embodiments, messages at different stages in conversations, even if similar, may be assigned to different clusters based on their locations within the conversations.

In a Determine Paths Step 525, paths between the nodes/clusters of the knowledge graph are determined based on the order of messages in the conversations. For example, referring to the example illustrated in FIG. 2, if the message associated with Top-Level Node 210B is commonly followed by the messages of Intermediate Node 220C, then a path is established between these two nodes. Note that paths may be one-way, two-way or recursive. Nodes optionally include state information indicating if a node has already been traversed in a particular conversation. Paths from a current node to a next node are optionally based on an identity of the current node and previous nodes traversed in a path. Paths are optionally determined using a machine learning system trained using customer support conversations.

In an optional Associate Expert Step 530, one or more human experts may be assigned to one or more nodes within the knowledge graph. Associate Expert Step 530 is optionally performed using Routing Logic 165 or Matching Logic 155, and experts can be assigned based on any of the expert characteristics discussed herein. The assigned experts may have responsibility for the quality of nodes and have conversations passed to them when assigned nodes fail to produce adequate results.

In an optional Identify Problem Nodes Step 535, nodes of the knowledge graph where input from a human expert are most likely to be required or helpful are identified. This identification can include statistical analysis of customer feedback, inability to assign customer messages to one of an expected set of clusters, human review of conversations, statistical analysis of conversation efficiency or success, and/or the like.

In an optional Receive Expert Input Step 540, input from a human expert is requested and received regarding improvements to the nodes identified in Identify Problem Nodes Step 535. Receive Expert Input Step 540 can include adapting a message associated with a node in response to the received input. For example, a responsive message may be adapted to improve determination of a path to a next node. Receive Expert Input Step 540 can also include changing paths between nodes and/or the criteria used to determine which path to take, as suggested by an expert. An expert may suggest that a cluster be reconfigured, e.g., modified, divided in to more than one cluster, or deleted.

In an optional Identify New Cluster Step 545, a new cluster of messages that could not be assigned to existing clusters within the knowledge graph is identified. New Cluster Step 545 may include dividing an existing cluster in two or more or may include establishing an entirely new cluster. New Cluster Step 545 typically include establishing new paths between the new cluster and existing clusters. New Cluster Step 545 may be needed when a new type of customer inquiry is received, e.g., as a result of a new issue or new product or service. New Cluster Step 545 may be needed when an existing cluster is not specific enough to determine the optimum path of a conversation. In some embodiments, New Cluster Step 545 is performed using Cluster Logic 127.

FIG. 6 illustrates methods of processing a customer service inquiry, according to various embodiments of the invention. In contrast with the methods illustrated in FIG. 3, the methods of FIG. 6 are based on multi-level clusters within the knowledge graph discussed herein. This difference allows for the automated resolution of customer issue in a conversational mode. As noted elsewhere herein, the approach can be applied to automated conversations in areas other than customer support. A result of the methods of FIG. 6 is the creation of a conversation including ordered messages between the customer and an automated response management system.

In a Receive Inquiry Step 610, a customer service inquiry is received, optionally via Request I/O 135. The inquiry may include a message from a customer as well as related metadata. For example, a request may be related to how to use a product and the metadata may identify the product and the user.

In a Parse Step 620, the received inquiry is parsed to determine message subject matter and/or grammatical objects within the inquiry. Parse Step 620 is optionally performed using Parsing Logic 140 and can include natural language processing of text and/or audio within the received message. In some embodiments, Parse Step 620 can include analysis of the contents of an image or video.

In an Assign Step 630, the message is assigned to a cluster of customer messages and the node of the knowledge graph representing that cluster. On the first execution of Assign Step 630 in a conversation, the assigned cluster is a top-level cluster within the knowledge graph. The assignment is based on contents of the inquiry including metadata and/or message. For example, an inquiry including a request to purchase a product may be assigned to a cluster of such requests. On subsequent execution of Assign Step 630, the assigned cluster is one of a plurality of alternative clusters connected to a current cluster by paths within the knowledge graph. Assignment of a message to a cluster is optionally further based on identities of one or more clusters previously navigated in creation of the conversation, e.g., on a state of the conversation. Assign Step 620 is optionally performed using Cluster Logic 127.

In a Navigate Step 640, the knowledge graph is navigated along a path to the node of the assigned cluster and the assigned cluster becomes a new current cluster. In some embodiments, a particular node can be visited more than once in a conversation. Navigation along the path from the current cluster to the next cluster can include, for example: 1) navigating from a top-level cluster to an intermediate cluster, or 2) navigating from an intermediate cluster to a leaf cluster.

In an Extract Step 650, a responsive message is extracted from the new current cluster and in a Provide Step 660, the responsive message is provided to the customer in response to the inquiry received in Inquiry Step 610 or message received in a Receive Message Step 670. Often, the responsive message is configured to facilitate identification of a next cluster to navigate to. This results in a conversation of ordered messages between the customer and an automated response management system, e.g., Response Management System 105.

In an optional Filter Step 665, Filtering Logic 117 is used to filter communications between the customer and the response management system. In some embodiments, this filtering is predictive and may be configured to prevent private and/or sensitive information from being received by the responsive management system. For example, if it is known that a particular node is likely to result in a customer sending personal medical information to Response Management System 105, then the conversation may be passed to a human agent at Contact Center 125 before the personal medical information is sent. In some embodiments, the agent at Contact Center 125 can pass the conversation back to Response Management System 105 to continue the conversation following the exchange of private or sensitive information.

In a Receive Message Step 670, another message is received from the customer. Steps 620-670 can then be repeated to generate a customer support conversation.

In an optional Determine Failure Step 675, it may be determined that the received customer message cannot be associated with any of the alternative clusters connected to the current cluster, with at least a minimum level of confidence. Alternatively, it may be determined that a message is not being properly assigned based on customer response or failure to resolve a customer inquiry. Both of these cases represent failures of the automated response process.

In an optional Provide Step 680, in response to Determine Failure Step 675, the ordered messages of the conversation between the automated response management system and the customer are sent to a human expert. Optionally the human expert has been identified using Routing Logic 165 and/or is associated with a relevant cluster/node of the knowledge graph.

In an optional Receive Update Step 685, an update to the knowledge graph is received from the human expert. This update can include, for example, an updated responsive message to be associated with one or more clusters of the knowledge graph; a change in a path with the knowledge graph; addition or elimination of a cluster; or change to any other aspect of the knowledge graph. A change in a path within the knowledge graph can be based on 1) the updated responsive message, 2) on the determination that the responsive message is inadequate, and/or 3) the failure to resolve a customer inquiry.

Several embodiments are specifically illustrated and/or described herein. However, it will be appreciated that modifications and variations are covered by the above teachings and within the scope of the appended claims without departing from the intended scope thereof. For example, customer support content can include video, images, chat bots, and other media. The systems and methods discussed herein may be applied to technical service, sales service, advice, reviews, geographic directions, assembly directions, customer service, and/or the like.

The embodiments discussed herein are illustrative of the present invention. As these embodiments of the present invention are described with reference to illustrations, various modifications or adaptations of the methods and or specific structures described may become apparent to those skilled in the art. All such modifications, adaptations, or variations that rely upon the teachings of the present invention, and through which these teachings have advanced the art, are considered to be within the scope of the present invention. Hence, these descriptions and drawings should not be considered in a limiting sense, as it is understood that the present invention is in no way limited to only the embodiments illustrated.

Computing systems referred to herein can comprise an integrated circuit, a microprocessor, a personal computer, a server, a distributed computing system, a communication device, a network device, or the like, and various combinations of the same. A computing system may also comprise volatile and/or non-volatile memory such as random access memory (RAM), dynamic random access memory (DRAM), static random access memory (SRAM), magnetic media, optical media, nano-media, a hard drive, a compact disk, a digital versatile disc (DVD), and/or other devices configured for storing analog or digital information, such as in a database. The various examples of logic noted above can comprise hardware, firmware, or software stored on a computer-readable medium, or combinations thereof. A computer-readable medium, as used herein, expressly excludes paper. Computer-implemented steps of the methods noted herein can comprise a set of instructions stored on a computer -readable medium that when executed cause the computing system to perform the steps. A computing system programmed to perform particular functions pursuant to instructions from program software is a special purpose computing system for performing those particular functions. Data that is manipulated by a special purpose computing system while performing those particular functions is at least electronically saved in buffers of the computing system, physically changing the special purpose computing system from one state to the next with each change to the stored data.

Any of the logic discussed herein may include hardware, firmware and/or software stored on a computer readable medium. This logic may be implemented in an electronic device, e.g., circuits, to produce a special purpose computing system.

## Claims

1. A customer support system comprising:
a conversation storage configured to store a conversation, the conversation comprising an ordered exchange of messages between at least one customer and a response management system;
parsing logic configured to parse the messages and identify topic characteristics of the message;
cluster logic configured to assign the messages to different clusters based on the topic characteristics, the different clusters being included in a knowledge graph of the clusters, paths within the knowledge graph having an order of the clusters corresponding to the ordered exchange of messages, a dimension of the knowledge graph corresponding to clusters associated with different subject matter;
response logic configured to provide responsive messages to the customer, the responsive messages being associated with the clusters and being selected by navigating between clusters of the knowledge graph based on messages received from the customer;
an I/O configured to communicate the messages between the at least one customer and the response management system; and
a processor configured to execute at least the cluster logic or the response logic.

2. The system of claim 1, wherein the knowledge graph includes at least three types of clusters comprising:
top level clusters configured for entry into the knowledge graph;
intermediate clusters configured to identify needs of the customer; and
leaf clusters associated with answers to customer needs.

3. The system of claim 1 or claim 2, wherein the response management system includes the response logic and the response logic is configured to receive assistance from a human agent to navigate between the clusters.

4. The system of any one of claims 1, 2 or 3, wherein the response logic is configured to switch between providing answers from the knowledge graph of clusters to providing answers from a human agent, each node of the knowledge graph being associated with a cluster.

5. The system of claim 4, further comprising routing logic configured to select the human agent based on a specificity characteristic of the human agent and/or an association between the human agent and specific nodes of the knowledge graph.

6. The system of any one of claims 1-4 or 5, further comprising routing logic configured to identify a top-level node of the knowledge graph configured for entry into the knowledge graph, the selection being from a plurality of top-level nodes and based on one or more characteristic of an initial customer inquiry, the initial customer inquiry including a first message of the conversation.

7. The system of any one of claims 1-5 or 6, wherein the knowledge graph is configured to arrive at an answer via multiple paths between the clusters.

8. The system of any one of claims 1-6 or 7, wherein the response logic is configured to pass a conversation to a human agent if the navigation of the knowledge graph does not result in selection of an acceptable responsive message.

9. The system of any one of claims 1-7 or 8, further comprising training logic configured to receive the conversation and train the cluster logic to assign the messages to different clusters based on the received conversation.

10. The system of any one of claims 1-8 or 9, further comprising training logic configured to build the knowledge graph based on the conversation.

11. The system of claim 10, wherein the training logic is further configured to receive messages from human experts, the messages including questions to ask customers and responsive messages to customer messages.

12. The system of any one of claims 10 or 11, wherein the training logic includes a machine learning system trained on multiple conversations, each of the multiple conversations including an ordered exchange of messages.

13. The system of any one of claims 10, 11 or 12, wherein the training logic is configured to re-train the knowledge graph from a first customer support domain to a second customer support domain.

14. The system of any one of claims 1-12 or 13, further comprising healing logic configured to correct the knowledge graph by identifying nodes of the knowledge graph that produce undesirable results and engaging a human expert to modify the identified nodes.

15. The system of claim 14, wherein the healing logic is configured to select the engaged human expert based on a domain expertise of the engaged human expert.
